(19) Europäisches Patentamt
European Patent Office
Office européen des brevets

(11) EP 3 012 352 B1

(12) **EUROPEAN PATENT SPECIFICATION**

(45) Date of publication and mention of the grant of the patent:
**12.07.2017 Bulletin 2017/28**

(21) Application number: **14814133.6**

(22) Date of filing: **17.06.2014**

(51) Int Cl.:
***C25B 13/08*** *(2006.01)*
***C08J 5/22*** *(2006.01)*
***B01J 39/20*** *(2006.01)*
*C08F 8/14* *(2006.01)*
***C08F 214/26*** *(2006.01)*
***C25B 9/08*** *(2006.01)*
***C25B 1/46*** *(2006.01)*

(86) International application number:
**PCT/JP2014/066005**

(87) International publication number:
**WO 2014/203886 (24.12.2014 Gazette 2014/52)**

# (54) FLUORINE-CONTAINING POLYMER, CATION EXCHANGE MEMBRANE, AND ELECTROLYSIS VESSEL

FLUORHALTIGES POLYMER, KATIONENAUSTAUSCHMEMBRAN UND ELEKTROLYSEGEFÄSS

POLYMÈRE FLUORÉ, MEMBRANE ÉCHANGEUSE DE CATIONS, ET BAIN ÉLECTROLYTIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **19.06.2013 JP 2013128502**

(43) Date of publication of application:
**27.04.2016 Bulletin 2016/17**

(73) Proprietor: **ASAHI KASEI KABUSHIKI KAISHA**
**Tokyo 101-8101 (JP)**

(72) Inventors:
- **KAIHARA Shinichi**
  **Tokyo 101-8101 (JP)**
- **YONEZAWA Masaaki**
  **Tokyo 101-8101 (JP)**
- **KONAGAYOSHI Masaru**
  **Tokyo 101-8101 (JP)**
- **SHINADA Tomohiro**
  **Tokyo 101-8101 (JP)**

(74) Representative: **dompatent von Kreisler Selting Werner -**
**Partnerschaft von Patent- und Rechtsanwälten mbB**
**Deichmannhaus am Dom**
**Bahnhofsvorplatz 1**
**50667 Köln (DE)**

(56) References cited:
**EP-A1- 1 927 678**
**EP-A1- 2 272 877**
**JP-A- 2002 275 672**
**JP-A- 2004 067 880**
**JP-A- 2005 060 516**
**JP-A- 2007 146 173**
**US-A- 3 546 186**
**US-A1- 2014 080 930**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 012 352 B1

## Description

### Technical Field

The present invention relates to a fluorine-containing polymer, a cation exchange membrane and an electrolysis vessel using the same.

### Background Art

Fluorine-containing ion exchange membranes have high heat resistance and high chemical resistance, and therefore are used as cation exchange membranes for electrolysis for producing chlorine and alkali through electrolysis of alkali chlorides, as well as a variety of separating membranes for electrolysis such as separating membranes for generating ozone, fuel cells, water electrolysis and hydrochloric acid electrolysis. Among these, in the electrolysis of alkali chlorides, high current efficiency is demanded from the viewpoint of productivity, low electrolytic voltage is demanded from the viewpoint of economy, and low common salt concentration in sodium hydroxide is demanded from the viewpoint of product quality.

Among these demands, to attain high current efficiency, ion exchange membranes composed of at least two layers comprising a highly anion-exclusive carboxylic layer having a carboxylic group as an ion exchange group and a low-resistance sulfonic acid layer having a sulfo group as an ion exchange group are usually used. Since these ion exchange membranes are directly in contact with chlorine and sodium hydroxide at 80 to 90°C during operation of electrolysis, fluorine-containing polymers having very high chemical durability are used as a material for the ion exchange membrane. However, it is known that if such an ion exchange membrane composed of at least two layers of a carboxylic acid layer and a sulfonic acid layer is used, the current efficiency is reduced from the initial stage of the electrolysis over time. The factors therefor include deposition of impurities contained in alkali chlorides in the inside of the carboxylic acid layer as the electrolysis progresses; attempts have been made to suppress a reduction in current efficiency through improvements in the carboxylic acid layer.

For example, Patent Literature 1 discloses stabilization of current efficiency through an ion exchange membrane having a controlled equivalent weight (EW) and thickness of a carboxylic acid layer with a controlled hydrolysis method to shift the deposition position of crystals containing iodine from the surface of the carboxylic acid layer to the inside of the layer.

### Citation List

### Patent Literature

Patent Literature 1: JP 2002-275672 A

### Summary of Invention

### Technical Problem

Here, suppression of a reduction in current efficiency over time during operation of a zero gap electrolysis vessel at 90°C and a high current density of 6 $kA/m^2$ is required for the ion exchange membrane.

The present invention has been made in consideration of the above circumstances, and a main object of the present invention is to provide a fluorine-containing polymer which can produce a cation exchange membrane exhibiting stable current efficiency for a long time during operation of a zero gap electrolysis vessel at 90°C and a high current density of 6 $kA/m^2$, a cation exchange membrane comprising the fluorine-containing polymer, and an electrolysis vessel comprising the cation exchange membrane.

### Solution to Problem

The present inventors, who have conducted extensive research to solve the above problems, have found that use of a specific fluorine-containing polymer comprising a tetrafluoroethylene unit and a perfluoroethylene unit having a carboxylic acid-type ion exchange group can solve the above problems, and have completed the present invention.

Namely, the present invention is as follows.

[1] A cation exchange membrane comprising a fluorine-containing polymer containing a tetrafluoroethylene unit and a perfluoroethylene unit having a carboxylic acid-type ion exchange group, wherein the melt index a of a fluorine-containing polymer obtained by esterifying the carboxylic acid-type ion exchange group with methanol is 3 to 50 g/10 min, the melt index a being measured under conditions at 270°C, a load of 2.16 kg and an orifice inner diameter of 2.09 mm, and the melt index a and the melt index b of the fluorine-containing polymer obtained by esterifying the carboxylic acid-type ion exchange group with methanol satisfy a relation represented by the following expression (1), the melt index b being measured under conditions at 260°C, a load of 2.16 kg and an orifice inner diameter of 2.09 mm:

$$(a - b)/(270 - 260) \leq 0.027 \times a + 0.19 \qquad (1).$$

[2] The cation exchange membrane according to, wherein the perfluoroethylene unit having a carboxylic acid-type ion exchange group is a unit represented by the following formula (A):

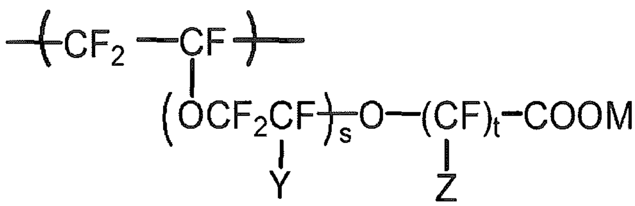

(A)

where s represents an integer of 0 to 2; t represents an integer of 1 to 12; Y and Z each independently represent F or $CF_3$; M represents an alkali metal.

[3] The cation exchange membrane according to [1] or [2], wherein the melt index a and the melt index b satisfy the relation represented by the following expression (2):

$$(a - b)/(270 - 260) \leq 0.027 \times a + 0.14 \qquad (2).$$

[4] The cation exchange membrane according to [1] or [2], wherein the melt index a and the melt index b satisfy the relation represented by the following expression (3):

$$(a - b)/(270 - 260) \leq 0.027 \times a + 0.09 \qquad (3).$$

[5] The cation exchange membrane according to any one of [1] to [4], wherein the melt index a is 4 to 30 g/10 min.

[6] The cation exchange membrane according to any one of [1] to [4], wherein the melt index a is 5 to 20 g/10 min.

[7] The cation exchange membrane according to any one of [1] to [6], wherein the equivalent weight of the fluorine-containing polymer obtained by esterifying the carboxylic acid-type ion exchange group with methanol is 900 to 1400 g/eq.

[8] The cation exchange membrane according to any one of [1] to [6], wherein an equivalent weight of the fluorine-containing polymer obtained by esterifying the carboxylic acid-type ion exchange group with methanol is 1100 to 1300 g/eq.

[9] A fluorine-containing polymer comprising a tetrafluoroethylene unit and a perfluoroethylene unit having a methoxycarbonyl group, wherein the melt index a measured under conditions at 270°C, a load of 2.16 kg, and an orifice inner diameter of 2.09 mm is 3 to 50 g/10 min, and the melt index a and a melt index b measured under conditions at 260°C, a load of 2.16 kg and an orifice inner diameter of 2.09 mm satisfy the relation represented by the following expression (1):

$$(a - b)/(270 - 260) \leq 0.027 \times a + 0.19 \qquad (1).$$

[10] The fluorine-containing polymer according to [9], wherein the perfluoroethylene unit having a methoxycarbonyl group is a unit represented by the following formula (B):

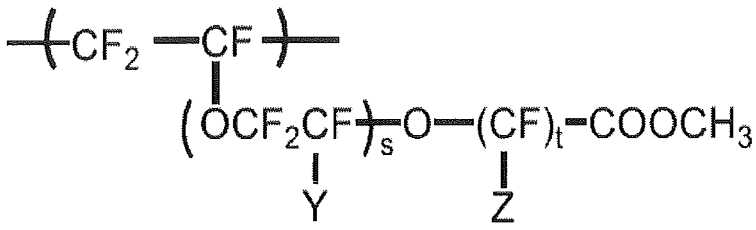

(B)

wherein s represents an integer of 0 to 2, t represents an integer of 1 to 12, Y and Z each independently represent F or $CF_3$.

[11] The fluorine-containing polymer according to [9] or [10], wherein the melt index a and the melt index b satisfy the relation represented by the following expression (2):

$$(a - b)/(270 - 260) \leq 0.027 \times a + 0.14 \qquad (2).$$

[12] The fluorine-containing polymer according to [9] or [10], wherein the melt index a and the melt index b satisfy the relation represented by the following expression (3):

$$(a - b)/(270 - 260) \leq 0.027 \times a + 0.09 \qquad (3).$$

[13] The fluorine-containing polymer according to any one of [9] to [12], wherein the melt index a is 4 to 30 g/10 min.

[14] The fluorine-containing polymer according to any one of [9] to [12], wherein the melt index a is 5 to 20 g/10 min.

[15] The fluorine-containing polymer according to any one of [9] to [14], wherein an equivalent weight is 900 to 1400 g/eq.

[16] The fluorine-containing polymer according to any one of [9] to [14], wherein an equivalent weight is 1100 to 1300 g/eq.

[17] A cation exchange membrane comprising at least a hydrolyzed product of the fluorine-containing polymer according to any one of [9] to [16].

[18] An electrolysis vessel comprising at least an anode, a cathode, and the cation exchange membrane according to any one of [1] to [8] or [17] disposed between the anode and the cathode.

## Advantageous Effect of Invention

The present invention can provide a fluorine-containing polymer which can produce a cation exchange membrane exhibiting stable current efficiency for a long time during operation of a zero gap electrolysis vessel at 90°C and a high current density of 6 $kA/m^2$, a cation exchange membrane comprising the fluorine-containing polymer, and an electrolysis vessel comprising the cation exchange membrane.

## Brief Description of Drawings

Figure 1 is a sectional schematic view illustrating one embodiment of an electrolysis vessel.

Figure 2 is a graph in which a of the fluorine-containing polymers in Examples 1 to 16 and Comparative Examples 1 to 4 is plotted against (a - b)/(270 - 260).

Figure 3 is a graph in which a of the fluorine-containing polymers obtained through methyl esterification in Examples 1 to 16 and Comparative Examples 1 to 4 is plotted against (a - b)/(270 - 260).

## Description of Embodiments

Hereinafter, an embodiment of the present invention (hereinafter referred to as "the present embodiment") will be described in detail.

<Fluorine-containing polymer>

The fluorine-containing polymer according to the present embodiment can be obtained through polymerization of tetrafluoroethylene monomer and a perfluorovinyl compound having a functional group convertible into a carboxylic acid-type ion exchange group. The fluorine-containing polymer is characterized in that the melt index a measured under the condition at 270°C, a load of 2.16 kg and an orifice inner diameter of 2.09 mm is 3 to 50 g/10 min, and the melt index a and the melt index b measured under the condition at 260°C, a load of 2.16 kg and an orifice inner diameter of 2.09 mm satisfy the relation represented by the following expression (1):

$$(a - b)/(270 - 260) \leq 0.027 \times a + 0.19 \qquad (1).$$

The fluorine-containing polymer is a fluorine-containing polymer having an ion exchange group precursor which can be turned into a carboxylic acid-type ion exchange group by hydrolysis.

Examples of the perfluorovinyl compound having a functional group convertible into a carboxylic group (carboxylic acid-type ion exchange group) include monomers represented by $CF_2$-CF($OCF_2$CYF)s-O(CZF)t-COOR. Here, s represents an integer of 0 to 2; t represents an integer of 1 to 12; Y and Z each independently represent F or $CF_3$; R represents a lower alkyl group.

Among these, compounds represented by $CF_2$=CF($OCF_2$CYF)n-O($CF_2$)m-COOR are preferred. Here, n represents an integer of 0 to 2; m represents an integer of 1 to 4; Y represents F or $CF_3$; R represents $CH_3$, $C_2H_5$ or $C_3H_7$. In particular, if the cation exchange membrane according to the present embodiment is used as a cation exchange membrane for alkaline electrolysis, it is preferred that at least a perfluoro compound be used as a monomer; because the alkyl group in the ester group (see R above) is lost from the polymer when hydrolyzed, the alkyl group (R) does not need to be a perfluoroalkyl group in which every hydrogen atom is replaced with a fluorine atom.

Specific examples of these include monomers listed below:

$CF_2=CFOCF_2CF(CF_3)OCF_2COOCH_3$,
$CF2=CFOCF_2CF(CF_3)O(CF_2)_2COOH_3$,
$CF_2=CF[OCF_2CF(CF_3)]_2O(CF_2)_2COOCH_3$,
$CF_2=CFOCF_2CF(CF_3)O(CF_2)_3COOCH_3$,
$CF_2=CFO(CF_2)_2COOCH_3$, and
$CF_2=CFO(CF_2)_3COOCH_3$.

Among these, $CF_2=CFOCF_2CF(CF_3)O(CF_2)_2COOCH_3$ is more preferred.

The fluorine-containing polymer according to the present embodiment can be obtained by polymerizing tetrafluoroethylene and a methyl ester type perfluorovinyl compound having a functional group convertible into a carboxylic acid-type ion exchange group.

The fluorine-containing polymer may be produced by further copolymerizing a vinyl compound having a functional group convertible into a sulfo-group (sulfone type ion exchange group). As a vinyl compound having a functional group convertible into a sulfo group (sulfone type ion exchange group), a monomer represented by $CF_2$=CFO-X-$CF_2$-$SO_2F$ is preferred, for example. Here, X represents a perfluoro group.

Specific examples of these include monomers listed below:

$CF_2=CFOCF_2CF_2SO_2F$
$CF_2=CFOCF_2CF(CF_3)OCF_2CF_2SO_2F$,
$CF_2=CFOCF_2CF(CF_3)OCF_2CF_2CF_2SO_2F$,
$CF_2=CF(CF_2)_2SO_2F$,
$CF_2=CFO[CF_2CF(CF_3)O]_2CF_2CF_2SO_2F$, and
$CF_2=CFOCF_2CF(CF_2OCF_3)OCF_2CF_2SO_2F$.

Among these, $CF_2=CFOCF_2CF(CF_3)OCF_2CF_2CF_2SO_2F$ and $CF_2=CFOCF_2CF(CF_3)OCF_2CF_2SO_2F$ are more preferred.

The fluorine-containing polymer can be produced by polymerization methods publicly known or used, which are developed for homopolymerization and copolymerization of ethylene fluoride. Examples of the methods include bulk polymerization, solution polymerization, suspension polymerization and emulsion polymerization, and solution polymerization is more preferred.

As a polymerization solvent in solution polymerization, a broad range of fluorine-containing solvents well-known and publicly known can be used. Examples of the polymerization solvent include inert fluorine-containing solvents such

as $CF_2ClCFCl_2$ (CFC113), $CClF_2CF_2CFHCl$ (HCFC225cb), $CF_3CHFCHFCF_2CF_3$ (HFC43-10mee), perfluoromethylcyclohexane, perfluorodimethylcyclobutane, perfluorooctane and perfluorobenzene; hydrofluorocarbon-based solvents are more preferred.

As the polymerization initiator, oil-soluble polymerization initiators such as azo compounds such as azobisisobutyronitrile; diacyl peroxides such as benzoyl peroxide and dipentafluoropropionyl peroxide; peroxy esters such as t-butylperoxy isobutyrate; and hydroperoxides such as diisopropylbenzene hydroperoxide can be used in a broad range, and diacyl peroxides are more preferred. To adjust the molecular weight of the fluorine-containing polymer, a well-known or publicly known chain transfer agent such as alkanes such as pentane and hexane, and alkanols such as methanol and ethanol can also be added; in this case, alcohols are more preferred.

The polymerization reaction can be performed under conditions of a polymerization pressure of 0.01 MPa to 20 MPa, and a pressure of 0.03 to 10 MPa is more preferred. At a pressure of less than 0.01 MPa, the polymerization rate is low and such a low polymerization rate is industrially disadvantageous; a pressure of more than 20 MPa should be avoided for safety reasons because polymerization of a perfluoro monomer is induced.

The conditions other than the polymerization pressure and operation are not particularly limited, and a broad range of reaction conditions can be used. For example, the polymerization reaction can be performed under the condition at a polymerization temperature of 0 to 200°C, and a polymerization temperature of 10°C to 90°C is more preferred. At a temperature of less than 0°C, the polymerization rate is low and such a low polymerization rate is industrially disadvantageous; a temperature of more than 200°C should be avoided for safety reasons because polymerization of a perfluoro monomer is induced.

As polymerization of the fluorine-containing polymer progresses (as the fluorine-containing polymer concentration in the polymerization solution increases), the viscosity of the polymerization solution increases to produce a concentration distribution of the perfluoro monomer in the polymerization system; therefore, the EW distribution or molecular weight distribution of the resulting fluorine-containing polymer is increased. Here, EW indicates the equivalent weight [g-copolymer composition/eq.-functional group] (unit: g/eq.) of the fluorine-containing polymer. The EW distribution is an index for determining the width of EW which forms the fluorine-containing polymer, and indicates that as the EW distribution is larger, a fluorine-containing polymer is present from a low EW to a high EW and is a non-homogeneous fluorine-containing polymer. For this reason, it is preferred that polymerization be terminated at a stage where the concentration of the fluorine-containing polymer (% by mass) in the polymerization solution is low (stage at which the EW distribution or molecular weight distribution is small).

The concentration of the fluorine-containing polymer in the polymerization solution at the end of polymerization can be determined by dividing the weight of the fluorine-containing polymer generated by polymerization (weight of the resulting fluorine-containing polymer) by the weight of the polymerization solution (excluding the weight of the perfluoro monomer in the polymerization solution). The concentration of the fluorine-containing polymer in the polymerization solution at the end of polymerization may be 15.0% by mass or less, and is preferably 8.0% by mass or less, more preferably 7.0% by mass or less, still more preferably 6.0% by mass or less.

It is preferred in polymerization the molecular weight be adjusted by adding a chain transfer agent in addition to the initiator rather than by the amount of the initiator. If the molecular weight is adjusted only by the initiator, a fluorine-containing polymer having a large molecular weight distribution and EW distribution is produced compared to the cases where the chain transfer agent is used in combination. Although the reason why the EW distribution becomes large is not clear, it is inferred that the polymerization reaction rate is also increased if a large amount of the initiator is used; therefore, the balance between the diffusion rate of the perfluoro monomer and the polymerization reaction rate is lost to increase the EW distribution.

It is preferred that aliquots of the chain transfer agent be added until the end of polymerization rather than the total amount of the chain transfer agent be added all at once in the initial stage of polymerization. If the total amount of the chain transfer agent is added all at once in the initial stage of polymerization, a fluorine-containing polymer having a low EW is generated in the initial stage of polymerization, and thus generate a fluorine-containing polymer having a large EW distribution. The number of aliquots is preferably 2 or more, more preferably 5 or more, and continuous addition is more preferred.

The state of stirring during polymerization affects dissolution of the perfluoro monomer in the polymerization solution. It is inferred that as the area of the gas-liquid interface at which the polymerization solution and a gaseous phase are in contact with each other is larger, the perfluoro monomer is more readily dissolved in the polymerization solution; therefore, even if the polymerization viscosity increases, the perfluoro monomer can be homogeneously mixed with the polymerization solution to reduce the EW distribution of the fluorine-containing polymer. For this reason, it is preferred that a stirring blade having a large area of the gas-liquid interface be used. The structure is not particularly limited; for example, an anchor-shape stirring blade is preferred.

It is inferred that as the charging rate of the perfluorovinyl compound and that of the polymerization solvent during polymerization are lower, the area of the gas-liquid interface per volume of the polymerization solution is larger to obtain a fluorine-containing polymer having a smaller EW distribution; for this reason, a lower charging rate is preferred.

The charging rate may be 80% or less, and is preferably 70% or less, more preferably 60% or less.

The EW of the fluorine-containing polymer is preferably 500 to 2000 g/eq., more preferably 800 to 1700 g/eq., still more preferably 900 to 1400 g/eq., particularly preferably 1100 to 1300 g/eq. At an EW of less than 500, high current efficiency is not obtained; an EW of more than 2000 is disadvantageous because the electrolysis voltage is increased. The EW can be measured by neutralization titration.

In the fluorine-containing polymer, the melt index (MI) (unit: g/10 min) is 3 to 50, preferably 4 to 30, more preferably 5 to 20, where the melt index is measured according to JIS K-7210 under the condition at 270°C, a load of 2.16 kg and an orifice inner diameter of 2.09 mm is defined as a. At a of less than 3, degradation of the fluorine-containing polymer is readily caused because the temperature during film formation should be high; a of more than 50 should be avoided because the membrane strength is reduced.

The melt index a is correlated with the molecular weight of the fluorine-containing polymer, and thus can be adjusted by the amount of the initiator or the chain transfer agent added during polymerization.

When the melt index is measured under various conditions, if the fluorine-containing polymer is partially hydrolyzed, the measurement is performed after the hydrolyzed fluorine-containing polymer is preliminarily methyl esterified. Methyl esterification can be performed by a well-known or publicly known method using an esterification agent such as trimethyl orthoformate. In the case of the non-hydrolyzed fluorine-containing polymer (namely, a functional group not converted into an ion exchange group is present, and no ion exchange group is present), the measurement can be performed without methyl esterification treatment.

Here, the melt index (MI) (g/10 min) measured according to JIS K-7210 under the condition at 260°C, a load of 2.16 kg and an orifice inner diameter of 2.09 mm is defined as b. A cation exchange membrane comprising at least a hydrolyzed product of the fluorine-containing polymer having a melt index a and a melt index b satisfying the relation represented by the following expression (1) can exhibit stable current efficiency for a long time during operation of a zero gap electrolysis vessel at 90°C and a high current density of 6 kA/$m^2$:

$$(a - b)/(270 - 260) \leq 0.027 \times a + 0.19 \qquad (1).$$

(a - b)/(270 - 260) has a dependency on the value of a, and can be expressed as a straight line of a primary function to a. The inclination of the straight line is 0.027 from least squares approximation of experimental points. The long-term stability of current efficiency fluctuates due to the dimensions of the intercepts; a cation exchange membrane using a hydrolyzed product of the carboxylic acid-type fluorine-containing polymer having a intercept of 0.19 or less can exhibit stable current efficiency for a long time during operation of the vessel at 90°C and a high current density of 6 kA/$m^2$.

Although the reason why the cation exchange membrane using a hydrolyzed product of the fluorine-containing polymer can exhibit stable current efficiency for a long time during operation of a zero gap electrolysis vessel at 90°C and a high current density of 6 kA/$m^2$ is not clear, the reason is believed as follows.

"(a - b)/(270 - 260)" in the expression (1) indicates the change ratio of the melt index (hereinafter written as "c") in the measurement of the melt index of the fluorine-containing polymer at a temperature from 270°C to 260°C. Namely, c satisfies the relation represented by the following expressions (1a) and (1b):

$$c = (a - b)/(270 - 260) \qquad (1\ a)$$

$$c \leq 0.027 \times a + 0.19 \qquad (1\ b).$$

The melting temperature of the fluorine-containing polymer is correlated with the EW and the molecular weight. It is inferred that as c is lower, a change in melt viscosity is smaller from 260°C to 270°C, and a fluorine-containing polymer has a smaller EW distribution or molecular weight distribution. The carboxylic acid-type fluorine-containing polymer having a small EW distribution or molecular weight distribution has a small distribution of the moisture content of the hydrolyzed product in the carboxylic acid-type fluorine-containing polymer, and reduces portions having high moisture content and low moisture content compared to the average moisture content of the hydrolyzed product in the carboxylic acid-type fluorine-containing polymer. Accordingly, in the cation exchange membrane using a hydrolyzed product of the carboxylic acid-type fluorine-containing polymer having a small EW distribution or molecular weight distribution, such a phenomenon does not occur that the ion exchange ability of portions having low moisture content is lost during deposition of impurities in the portions having low moisture content, and sodium ions move only in portions having high moisture content to reduce current efficiency. Namely, if the EW distribution or the molecular weight distribution of the fluorine-containing polymer is small, the cation exchange membrane is barely affected by impurities during

operation of a zero gap electrolysis vessel at 90°C and a high current density of 6 $kA/m^2$ and can exhibit stable current efficiency for a long time.

Thus, as c is lower, more stable current efficiency for a long time can be exhibited. It should be noted that c has dependency on the value of a, and c increases as a increases. Accordingly, c exhibiting stable current efficiency for a long time changes due to the value of a. In the cation exchange membrane using at least the fluorine-containing polymer according to the present embodiment and/or a hydrolyzed product of the fluorine-containing polymer, c of a fluorine-containing polymer in which the hydrolyzed product of the fluorine-containing polymer is methyl esterified is preferably $c \leq 0.027 \times a + 0.19$, more preferably $c \leq 0.027 \times a + 0.14$, still more preferably $c \leq 0.027 \times a + 0.09$.

A difference between the melt index of the fluorine-containing polymer and the melt index of the fluorine-containing polymer in which the hydrolyzed product is methyl esterified in the cation exchange membrane comprising at least the hydrolyzed product of the fluorine-containing polymer may be found due to esterification treatment environments, etc. If the EW distributions and the molecular weight distributions of those fluorine-containing polymers do not essentially change (namely, the value of c does not significantly change) and satisfy $c \leq 0.027 \times a + 0.19$, those fluorine-containing polymers can exhibit long-term stability of current efficiency.

The fluorine-containing polymer according to the present embodiment comprising a tetrafluoroethylene unit and a perfluoroethylene unit having a methoxycarbonyl group, and has a melt index a of 3 to 50 g/10 min, and the melt index a and the melt index b can satisfy the relation represented by the above expression (1).

It is preferred that the perfluoroethylene unit having a methoxycarbonyl group be a unit represented by the following formula (B):

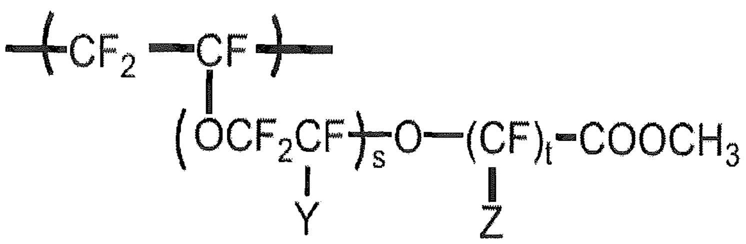

(B)

wherein s represents an integer of 0 to 2, t represents an integer of 1 to 12, and Y and Z each independently represent F or $CF_3$.

<Cation exchange membrane>

The cation exchange membrane has a function to selectively let pass cations through and comprises the fluorine-containing polymer. It is preferred that the membrane main body include at least a sulfonic acid layer having a sulfo group as an ion exchange group and a carboxylic acid layer having a carboxylic group as an ion exchange group. Usually, the cation exchange membrane is used with the sulfonic acid layer on the anode side of the electrolysis vessel and the carboxylic acid layer on the cathode side of the electrolysis vessel. It is preferred that the sulfonic acid layer be composed of a material having low electric resistance, and have a large membrane thickness from the viewpoint of the membrane strength. It is preferred that the carboxylic acid layer have a small membrane thickness and high anion exclusiveness. By such a carboxylic acid layer, selective permeability of cations such as sodium ion can be more significantly enhanced. The membrane main body may have a function to selectively let pass cations through, and comprise the fluorine-containing polymer; the structure is not always limited to the above structure. Here, anion exclusiveness indicates the property of the cation exchange membrane which prevent invasion or permeation of anions into the membrane.

The cation exchange membrane according to the present embodiment is characterized by comprising a hydrolyzed product of the fluorine-containing polymer.

The cation exchange membrane according to the present embodiment is characterized in that the cation exchange membrane according to the present embodiment comprises at least a hydrolyzed product of a fluorine-containing polymer obtained by copolymerizing a perfluoro monomer and a perfluorovinyl compound having a functional group convertible into a carboxylic acid-type ion exchange group, and that the melt index a of the fluorine-containing polymer in which the hydrolyzed product is esterified to the methyl ester, which is measured under the condition at 270°C, a load of 2.16 kg and an orifice inner diameter of 2.09 mm, is 3 to 50 g/10 min, and the melt index a and the melt index b of the fluorine-containing polymer in which the hydrolyzed product is methyl esterified, which is measured under the condition at 260 °C, a load of 2.16 kg and an orifice inner diameter of 2.09 mm, satisfy the relation represented by the following expression (1):

$$(a - b)/(270 - 260) \leq 0.027 \times a + 0.19 \qquad (1).$$

Namely, the cation exchange membrane according to the present embodiment is characterized in that the cation exchange membrane according to the present embodiment comprises the fluorine-containing polymer containing a tetrafluoroethylene unit and a perfluoroethylene unit having a carboxylic acid-type ion exchange group, the melt index a of a fluorine-containing polymer in which the carboxylic acid-type ion exchange group is esterified to the methyl ester is 3 to 50 g/10 min, and the melt index a and the melt index b of the fluorine-containing polymer in which the carboxylic acid-type ion exchange group is esterified to the methyl ester satisfy the relation represented by the above expression (1).

The perfluoroethylene unit having a carboxylic acid-type ion exchange group may be a unit represented by the following formula (A).

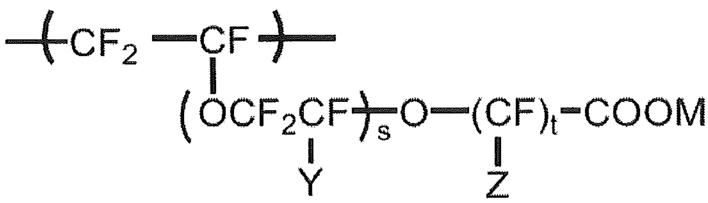

(A)

In the formula s represents an integer of 0 to 2; t represents an integer of 1 to 12; Y and Z each independently represent F or $CF_3$; M represents an alkali metal. It is preferred that M be K or Na, and it is more preferred that M be Na. It is preferred that t be an integer of 1 to 4, and it is more preferred that t be an integer of 1 to 3.

The fluorine-containing polymer is a carboxylic acid-type fluorine-containing polymer. It is preferred that the cation exchange membrane comprise at least a layer of a hydrolyzed product of the carboxylic acid-type fluorine-containing polymer and be a laminate of a layer of a hydrolyzed product of the carboxylic acid-type fluorine-containing polymer and a layer of a hydrolyzed product of a sulfonic acid-type fluorine-containing polymer.

It is preferred that the cation exchange membrane have a reinforcing core material disposed inside the membrane. The reinforcing core material is a member which reinforces the strength of the ion exchange membrane and the dimensional stability. The reinforcing core material can be disposed inside the membrane main body to control expansion/contraction of the ion exchange membrane within a desired range in particular. Such an ion exchange membrane can maintain high dimensional stability for a long time without expanding or contracting more than needed during electrolysis.

The cation exchange membrane is used in electrolysis. The membrane main body is immersed in a hydrolysis solution comprising an acid or an alkali to be hydrolyzed, and the ion exchange group precursor is converted (hydrolyzed) into an ion exchange group.

It is preferred that the cation exchange membrane have communicating pores in the membrane. The communicating pores indicate pores which can serve as flow paths for cations generated during electrolysis or the electrolyte solution. The communicating pores are tubular pores formed in the membrane main body, and are formed through elution of a sacrificial core material (or sacrificial string) caused by an acid or an alkali used for hydrolysis of the fluorine-containing polymer. The shape and diameter of the communicating pores can be controlled by selecting the shape and the diameter of the sacrificial core material (sacrificial string).

It is preferred that the cation exchange membrane have an inorganic coating layer on surfaces on the cathode and anode sides to prevent adhesion of gas. The coating layer is formed, for example, by a method of spraying a solution in which fine particles of an inorganic oxide are dispersed in a binder polymer solution.

<Electrolysis vessel>

The ion exchange membrane according to the present embodiment can be used in an electrolysis vessel. Figure 1 is a schematic view of one embodiment of the electrolysis vessel according to the present embodiment.

An electrolysis vessel 100 of the present embodiment includes at least an anode 200, a cathode 300, and a cation exchange membrane 1 according to the present embodiment disposed between the anode 200 and the cathode 300. Here, the electrolysis vessel 100 including the cation exchange membrane 1 is described as one example, but will not be limited to this, and the configuration can be modified in various ways within the scope of the effects of the present embodiment and implemented.

Although the electrolysis vessel 100 can be used in a variety of types of electrolysis, hereinafter, use of the electrolysis vessel 100 in electrolysis of an alkali chloride aqueous solution will be described as a representative example.

The electrolysis condition is not particularly limited, and electrolysis can be performed on any known condition. For example, an alkali chloride aqueous solution having a normality (N) of 2.5 to 5.5 is fed to the anodic chamber, and water or a diluted alkali hydroxide aqueous solution is fed to the cathodic chamber to perform electrolysis under DC current.

The configuration of the electrolysis vessel according to the present embodiment is not particularly limited; for example, the electrolysis vessel may be of a single-electrode type or a double-electrode type. The material for forming the electrolysis vessel 100 is not particularly limited; for example, as a material for the anodic chamber, titanium having resistance against alkali chlorides and chlorine is preferred, and as a material for the cathodic chamber, nickel having resistance against alkali hydroxides and hydrogen is preferred. In arrangement of the electrode, the anode 200 may be disposed at an appropriate interval from the cation exchange membrane 1; even if the anode 200 is disposed in contact with the cation exchange membrane 1, the electrolysis vessel can be used without any problem. The cathode is usually disposed at an appropriate interval from the cation exchange membrane; even a contact type electrolysis vessel (zero gap electrolysis vessel) having no such an interval can also be used without any problem.

Although a suitable embodiment according to the present invention has been described, the present invention will not be limited to the above embodiment.

Examples

Hereinafter, the present invention will be described more in detail according to Examples. The present invention will not be limited to the following Examples. The following units are based on mass unless otherwise specified.

<Electrolysis long-term evaluation test>

A change in performance of a cation exchange membrane was measured using the resulting ion exchange membrane in a 5 N (normality) salt water fed as an electrolyte solution. The electrolysis vessel having a structure in which the ion exchange membrane was disposed between the anode and the cathode and four electrolysis cells of a type forcing circulation of the electrolyte solution (forced circulation type) were arranged in series was used in electrolysis.

In evaluation of zero gap electrolysis, both of the cathode and the anode were in contact with the ion exchange membrane; as the cathode, an electrode composed of a nickel mesh having Ru and Ce as catalysts applied thereto was used. As the anode, an electrode composed of a titanium expanded metal having ruthenium, iridium and titanium as catalysts applied thereto was used.

Salt water was fed to the anode side so as to maintain the concentration at 205 g/L, and water was fed to the cathode side while the sodium hydroxide concentration was kept at 32% by mass. The temperature of salt water was set at 90°C, and electrolysis was performed for 60 days under the condition at a current density of 6 $kA/m^2$ and a solution pressure of the cathode side in the electrolysis cell 5.3 kPa higher than that of the anode side. Subsequently, the value of current efficiency on day 60 after electrolysis was subtracted from the value of current efficiency on day 1 of electrolysis to measure a reduction in current efficiency and evaluate the stability of current efficiency. The current efficiency indicates the proportion of the amount of sodium hydroxide generated to the current flowing; the current efficiency reduces if impurity ions or hydroxide ions rather than sodium ions move through the cation exchange membrane according to the current flowing.

The current efficiency can be determined by dividing the molar amount of sodium hydroxide generated within a predetermined time by the molar amount of electrons in the current flowing during that period. The molar amount of sodium hydroxide can be determined by recovering sodium hydroxide generated through electrolysis in a plastic container to measure the mass.

The stability of current efficiency was evaluated in terms of a reduction $\Delta CE$(%) in current efficiency for 60 days, and $\Delta CE \geq 0.6$ was ranked as "C", $0.6 < \Delta CE \leq 0.4$ was ranked as "B", and $\Delta CE < 0.4$ was ranked as "A".

[Example 1]

(Preparation of fluorine-containing polymer)

To obtain a carboxylic acid-type fluorine-containing polymer, solution polymerization was performed. A stirring blade of an anchor type was used. First, 5160 g of $CF_2=CFOCF_2CF(CF_3)O(CF_2)_2COOCH_3$ and 15633 g of HFC-43-10mee were placed in a 20-L autoclave made of stainless steel, and the inside of the container was sufficiently purged with nitrogen; after that, the inside of the container was further purged with $CF_2=CF_2$ (TFE), and was heated to stabilize the inner temperature of the container at 35°C; the inside of the container was pressurized with TFE to 0.232 MPa-G (gauge pressure). Next, 103 g of a solution containing 5% of $(CF_3CF_2CF_2COO)_2$ in HFC43-10mee as a polymerization initiator and 2.04 g of methanol as a chain transfer agent were placed to initiate the reaction. While TFE was intermittently fed with stirring at 35°C, 1.86 g of methanol was placed midway to drop the TFE pressure from the initial pressure of

0.232 MPa-G to the end pressure of 0.206 MPa-G; when 688 g of TFE was fed, polymerization was terminated. After the non-reacted TFE was discharged to the outside of the system, methanol was added to the resulting polymerization solution to aggregate and separate a fluorine-containing polymer. After drying, 1210 g of a carboxylic acid-type fluorine-containing polymer was obtained. The concentration of the fluorine-containing polymer in the polymerization solution was calculated from the amount of the resulting fluorine-containing polymer; it was 5.6% by mass. The resulting fluorine-containing polymer was pelletized with a twin screw extruder. The EW of the fluorine-containing polymer was 1110 g/eq.

The MI of the carboxylic acid-type fluorine-containing polymer was measured with a melt indexer F-F01 made by Toyo Seiki Seisaku-sho, Ltd. The melt index a measured according to JIS K-7210 under the condition at 270°C, a load of 2.16 kg and an orifice inner diameter of 2.09 mm was 48.24 (g/10 min), and the melt index b measured under the condition at 260°C, a load of 2.16 kg and an orifice inner diameter of 2.09 mm was 33.83 (g/10 min). c was calculated from a and b; c was 1.44 and $c \leq 0.027 \times a + 0.19$. The results are shown in Figure 2 in which the results are plotted where the ordinate is c and the abscissa is a.

(Preparation of cation exchange membrane)

A sulfonic acid-type fluorine-containing polymer (A1), which was a copolymer of $CF_2=CF_2$ and $CF_2=CFOCF_2CF(CF_3)OCF_2CF_2SO_2F$ and had an EW of 1020 g/eq., was prepared. This sulfonic acid-type fluorine-containing polymer (A1) and the above carboxylic acid-type fluorine-containing polymer were used and co-extruded by a T die method to obtain a two-layer film X in which the thickness of the layer of the carboxylic acid-type fluorine-containing polymer was 18 μm and the thickness of the sulfonic acid-type fluorine-containing polymer was 74 μm. Separately, a sulfonic acid-type fluorine-containing polymer (A2), which was a copolymer of $CF_2=CF_2$ and $CF_2=CFOCF_2CF(CF_3)OCF_2CF_2SO_2F$ and had an EW of 952 g/eq., was prepared. This sulfonic acid-type fluorine-containing polymer was extruded into a single layer to obtain a film Y of 20 μm.

As a reinforcing core material, a 100-denier tape yarn made of polytetrafluoroethylene (PTFE) and twisted at 900 turns/m into a string was used (hereinafter referred to as PTFE string). As a warp sacrificial string, a 35-denier and 8-filament yarn made of polyethylene terephthalate (PET) and twisted at 200 turns/m into a string was used (hereinafter referred to as PET string). As a weft sacrificial string, a 35-denier and 8-filament yarn made of polyethylene terephthalate (PET) and twisted at 200 turns/m into a string was used. Those strings were plain woven such that the PTFE string was disposed at 24 strings/inch (1 inch = 2.54 cm) and two sacrificial strings were disposed between adjacent PTFE strings; thereby, a woven fabric having a thickness of 100 μm was prepared as a reinforcing material.

Subsequently, a pre-embossed release paper, the film Y, the reinforcing material, and the film X were sequentially laminated on a drum having a heating source and a vacuum source therein and having micropores on the surface thereof, and were heated under the condition at a drum temperature of 225°C and a degree of reduced pressure of 0.067 MPa for 2 minutes to reduce pressure; then, the release paper was removed to obtain a composite membrane having depressions and projections. The resulting composite membrane was immersed in an aqueous solution at 90°C containing dimethyl sulfoxide (DMSO) (30% by mass) and potassium hydroxide (KOH) (15% by mass) for one hour to be saponified; then, the composite membrane was immersed in 0.5 N NaOH at 90°C for one hour to replace ions adhering to ion exchange groups with Na; subsequently, the composite membrane was washed by water. The composite membrane was further dried at 60°C.

A sulfonic acid-type fluorine-containing polymer (A3), which was a copolymer of $CF_2=CF_2$ and $CF_2=CFOCF_2CF(CF_3)OCF_2CF_2SO_2F$ and had an EW of 952 g/eq., was hydrolyzed, and then was turned into an acid type with hydrochloric acid. Zirconium oxide particles having a primary particle diameter of 1.15 μm were added to a 50/50 (mass ratio) mixed solution of water and ethanol in which the polymer (A3) of this acid type was dissolved in a proportion of 5% by mass such that the mass ratio of the polymer (A3) of an acid type to the zirconium oxide particles was 20/80. Subsequently, the zirconium oxide particles were dispersed with a ball mill until the average particle diameter of the zirconium oxide particles in a suspension was 0.94 μm; thereby a suspension was obtained. As the zirconium oxide particles, those prepared by crushing raw stone were used.

This suspension was applied by spraying onto both surfaces of the ion exchange membrane, and was dried to obtain a cation exchange membrane having a coating layer containing the polymer (A3) of an acid type and the zirconium oxide particles. The resulting cation exchange membrane was wetted with 2% by mass sodium bicarbonate, and then this ion exchange membrane was used to perform evaluation of long-term electrolysis in zero gap electrolysis; the stability of current efficiency was ranked as B.

Part of the resulting cation exchange membrane was used in the measurement of the melt index of the carboxylic acid-type fluorine-containing polymer. Most of the coating layer on the hydrolyzed product of the carboxylic acid-type fluorine-containing polymer was removed by brushing, and then the layer of the hydrolyzed product of the carboxylic acid-type fluorine-containing polymer was peeled with a pair of tweezers. The peeled hydrolyzed product of the carboxylic acid-type fluorine-containing polymer was immersed in a 50/50 (volume ratio) mixed solution of water and ethanol, and was ultrasonically treated to remove the rest of the coating layer.

The hydrolyzed product of the carboxylic acid-type fluorine-containing polymer from which the coating layer was completely removed was immersed in water at 90°C for 8 hours to be swollen. Subsequently, the hydrolyzed product of the carboxylic acid-type fluorine-containing polymer was immersed in 2 normality (N) of sulfuric acid at 35°C for two days to convert the Na type ion exchange group (-COONa) into an H type ion exchange group (-COOH), and it was confirmed by fluorescent X-ray analysis (XRF) that the Na amount after the treatment was 13% or less of that before the treatment. Subsequently, the treated product was immersed in a solution of 0.4% by mass sulfuric acid in methanol at 75°C for two days, and was then washed with methanol to remove sulfuric acid. The treated product was then immersed in trimethyl orthoformate at 75°C for 5 days to convert the H type ion exchange group (-COOH) and the Na type ion exchange group (-COONa) into a methyl ester group ($-COOCH_3$), and was dried.

Whether any hydrolyzed ion exchange group (-COOH) remained in the treated product was confirmed by measurement of the absorbance of -OH by Fourier transform infrared spectrophotometer (FT-IR). The straight line connected from the absorbance at the wave number of 3415 $cm^{-1}$ to the absorbance at 3203 $cm^{-1}$ was used as a baseline, and the absorbance at the peak position of 3325 $\pm$5 $cm^{-1}$ was measured from the baseline to determine the presence of -OH; it was confirmed that the absorbance from the baseline was 0 or less, no ion exchange group (-COOH) was also present in the treated product, and the ion exchange group (-COOH) was converted into a methyl ester group ($-COOCH_3$). The EW of the methyl esterified carboxylic acid-type fluorine-containing polymer was 1115 g/eq.

The melt index a of the methyl esterified carboxylic acid-type fluorine-containing polymer was 49.51 (g/10 min), and the melt index b was 34.75 (g/10 min). From a and b, c was calculated; c was 1.48 and $c \leq 0.027 \times a + 0.19$. The results are shown in Figure 3 in which the results are plotted where the ordinate is c, and the abscissa is a.

[Example 2]

Polymerization was performed in the same manner as in Example 1 except that the amount of methanol added in the initial stage in Example 1 was changed to 0.22 g and the amount of methanol added midway was changed to 0.20 g to prepare a fluorine-containing polymer having a different melt index a; a carboxylic acid-type fluorine-containing polymer was thereby obtained. The resulting fluorine-containing polymer was pelletized with a twin screw extruder. The EW of the fluorine-containing polymer was 1122 g/eq.

The melt index a of the carboxylic acid-type fluorine-containing polymer was 4.35 (g/10 min), and the melt index b was 1.80 (g/10 min). From a and b, c was calculated; c was 0.26 and $c \leq 0.027 \times a + 0.19$. The results are shown in Figure 2 in which the results are plotted where the ordinate is c, and the abscissa is a.

A cation exchange membrane was prepared in the same manner as in Example 1 except that the carboxylic type fluorine-containing polymer was used in Example 1. The resulting cation exchange membrane was wetted with 2% by mass sodium bicarbonate, and the ion exchange membrane was evaluated for long-term electrolysis in zero gap electrolysis; as a result, the stability of current efficiency was ranked as B.

As in Example 1, part of the cation exchange membrane was used in measurement of the melt index; the hydrolyzed product of the carboxylic acid-type fluorine-containing polymer was peeled, and methyl esterification treatment was performed. It was confirmed in the same manner as in Example 1 that no ion exchange group was present in the resulting carboxylic acid-type fluorine-containing polymer. The EW of the methyl esterified carboxylic acid-type fluorine-containing polymer was 1127 g/eq.

The melt index a of the methyl esterified carboxylic acid-type fluorine-containing polymer was 4.63 (g/10 min), and the melt index b was 2.06 (g/10 min). From a and b, c was calculated; c was 0.26 and $c \leq 0.027 \times a + 0.19$. The results are shown in Figure 3 in which the results are plotted where the ordinate is c, and the abscissa is a.

[Example 3]

Polymerization was performed in the same manner as in Example 1 except that the amount of methanol added in the initial stage in Example 1 was changed to 1.62 g and the amount of methanol added midway was changed to 1.47 g to prepare a fluorine-containing polymer having a different melt index a; a carboxylic acid-type fluorine-containing polymer was thereby obtained. The resulting fluorine-containing polymer was pelletized with a twin screw extruder. The EW of the fluorine-containing polymer was 1119 g/eq.

The melt index a of the carboxylic acid-type fluorine-containing polymer was 27.56 (g/10 min), and the melt index b was 19.07 (g/10 min). From a and b, c was calculated; c was 0.85 and $c \leq 0.027 \times a + 0.19$. The results are shown in Figure 2 in which the results are plotted where the ordinate is c, and the abscissa is a.

A cation exchange membrane was prepared in the same manner as in Example 1 except that the carboxylic type fluorine-containing polymer was used in Example 1. The resulting cation exchange membrane was wetted with 2% by mass sodium bicarbonate, and the ion exchange membrane was evaluated for long-term electrolysis in zero gap electrolysis; as a result, the stability of current efficiency was ranked as B.

As in Example 1, part of the cation exchange membrane was used in measurement of the melt index; the

hydrolyzed product of the carboxylic acid-type fluorine-containing polymer was peeled, and methyl esterification treatment was performed. It was confirmed in the same manner as in Example 1 that no ion exchange group was present in the resulting carboxylic acid-type fluorine-containing polymer. The EW of the methyl esterified carboxylic acid-type fluorine-containing polymer was 1127 g/eq.

The melt index a of the methyl esterified carboxylic acid-type fluorine-containing polymer was 29.22 (g/10 min), and the melt index b was 20.20 (g/10 min). From a and b, c was calculated; c was 0.90 and $c \leq 0.027 \times a + 0.19$. The results are shown in Figure 3 in which the results are plotted where the ordinate is c, and the abscissa is a.

[Example 4]

Solution polymerization was performed to obtain a carboxylic acid-type fluorine-containing polymer. A stirring blade of an anchor type was used. 5160 g of $CF_2$=$CFOCF_2CF(CF_3)O(CF_2)_2COOCH_3$ and 15633 g of HFC-43-10mee were placed in a 20-L autoclave made of stainless steel. The inside of the container was sufficiently purged with nitrogen, and was further purged with $CF_2$=$CF_2$ (TFE); the inside of the container was heated to stabilize the inner temperature of the container at 35°C; the inside of the container was pressurized with TFE to 0.239 MPa-G (gauge pressure). Here, 103 g of a solution containing 5% of $(CF_3CF_2CF_2COO)_2$ in HFC43-10mee as a polymerization initiator and 0.54 g of methanol as a chain transfer agent were placed to initiate the reaction. While TFE was intermittently fed with stirring at 35°C, 0.53 g of methanol was placed midway to drop the TFE pressure from the initial pressure of 0.239 MPa-G to the end pressure of 0.209 MPa-G; when 785 g of TFE was fed, polymerization was terminated. After the non-reacted TFE was discharged to the outside of the system, methanol was added to the resulting polymerization solution to aggregate and separate a fluorine-containing polymer. After drying, 1354 g of a carboxylic acid-type fluorine-containing polymer was obtained. The concentration of the fluorine-containing polymer in the polymerization solution was calculated from the amount of the resulting fluorine-containing polymer; it was 6.2% by mass. The resulting fluorine-containing polymer was pelletized with a twin screw extruder. The EW of the fluorine-containing polymer was 1142 g/eq.

The melt index a of the carboxylic acid-type fluorine-containing polymer was 3.52 (g/10 min), and the melt index b was 0.70 (g/10 min). From a and b, c was calculated; c was 0.28 and $c \leq 0.027 \times a + 0.19$. The results are shown in Figure 2 in which the results are plotted where the ordinate is c, and the abscissa is a.

A cation exchange membrane was prepared in the same manner as in Example 1 except that the carboxylic type fluorine-containing polymer was used in Example 1. The resulting cation exchange membrane was wetted with 2% by mass sodium bicarbonate, and the ion exchange membrane was evaluated for long-term electrolysis in zero gap electrolysis; as a result, the stability of current efficiency was ranked as B.

As in Example 1, part of the cation exchange membrane was used in measurement of the melt index; the hydrolyzed product of the carboxylic acid-type fluorine-containing polymer was peeled, and methyl esterification treatment was performed. It was confirmed in the same manner as in Example 1 that no ion exchange group was present in the resulting carboxylic acid-type fluorine-containing polymer. The EW of the methyl esterified carboxylic acid-type fluorine-containing polymer was 1138 g/eq.

The melt index a of the methyl esterified carboxylic acid-type fluorine-containing polymer was 3.95 (g/10 min), and the melt index b was 0.99 (g/10 min). From a and b, c was calculated; c was 0.30 and $c \leq 0.027 \times a + 0.19$. The results are shown in Figure 3 in which the results are plotted where the ordinate is c, and the abscissa is a.

[Example 5]

Polymerization was performed in the same manner as in Example 4 except that the amount of methanol added in the initial stage in Example 4 was changed to 2.52 g and the amount of methanol added midway was changed to 2.49 g to prepare a fluorine-containing polymer having a different melt index a; a carboxylic acid-type fluorine-containing polymer was thereby obtained. The resulting fluorine-containing polymer was pelletized with a twin screw extruder. The EW of the fluorine-containing polymer was 1152 g/eq.

The melt index a of the carboxylic acid-type fluorine-containing polymer was 47.86 (g/10 min), and the melt index b was 33.13 (g/10 min). From a and b, c was calculated; c was 1.47 and $c \leq 0.027 \times a + 0.19$. The results are shown in Figure 2 in which the results are plotted where the ordinate is c, and the abscissa is a.

A cation exchange membrane was prepared in the same manner as in Example 1 except that the carboxylic type fluorine-containing polymer was used in Example 1. The resulting cation exchange membrane was wetted with 2% by mass sodium bicarbonate, and the ion exchange membrane was evaluated for long-term electrolysis in zero gap electrolysis; as a result, the stability of current efficiency was ranked as B.

As in Example 1, part of the cation exchange membrane was used in measurement of the melt index; the hydrolyzed product of the carboxylic acid-type fluorine-containing polymer was peeled, and methyl esterification treatment was performed. It was confirmed in the same manner as in Example 1 that no ion exchange group was present in the resulting carboxylic acid-type fluorine-containing polymer. The EW of the methyl esterified carboxylic acid-type fluorine-containing polymer was 1152 g/eq.

The melt index a of the methyl esterified carboxylic acid-type fluorine-containing polymer was 48.93 (g/10 min), and the melt index b was 33.85 (g/10 min). From a and b, c was calculated; c was 1.51 and c $\leq$ 0.027 $\times$ a + 0.19. The results are shown in Figure 3 in which the results are plotted where the ordinate is c, and the abscissa is a.

[Example 6]

Polymerization was performed in the same manner as in Example 4 except that the amount of methanol added in the initial stage in Example 4 was changed to 2.30 g and the amount of methanol added midway was changed to 2.28 g to prepare a fluorine-containing polymer having a different melt index a; a carboxylic acid-type fluorine-containing polymer was thereby obtained. The resulting fluorine-containing polymer was pelletized with a twin screw extruder. The EW of the fluorine-containing polymer was 1148 g/eq.

The melt index a of the carboxylic acid-type fluorine-containing polymer was 35.65 (g/10 min), and the melt index b was 24.24 (g/10 min). From a and b, c was calculated; c was 1.14 and c $\leq$ 0.027 $\times$ a + 0.19. The results are shown in Figure 2 in which the results are plotted where the ordinate is c, and the abscissa is a.

A cation exchange membrane was prepared in the same manner as in Example 1 except that the carboxylic type fluorine-containing polymer was used in Example 1. The resulting cation exchange membrane was wetted with 2% by mass sodium bicarbonate, and the ion exchange membrane was evaluated for long-term electrolysis in zero gap electrolysis; as a result, the stability of current efficiency was ranked as B.

As in Example 1, part of the cation exchange membrane was used in measurement of the melt index; the hydrolyzed product of the carboxylic acid-type fluorine-containing polymer was peeled, and methyl esterification treatment was performed. It was confirmed in the same manner as in Example 1 that no ion exchange group was present in the resulting carboxylic acid-type fluorine-containing polymer. The EW of the methyl esterified carboxylic acid-type fluorine-containing polymer was 1146 g/eq.

The melt index a of the methyl esterified carboxylic acid-type fluorine-containing polymer was 38.98 (g/10 min), and the melt index b was 26.61 (g/10 min). From a and b, c was calculated; c was 1.24 and c $\leq$ 0.027 $\times$ a + 0.19. The results are shown in Figure 3 in which the results are plotted where the ordinate is c, and the abscissa is a.

[Example 7]

Polymerization was performed in the same manner as in Example 4 except that the amount of methanol added in the initial stage in Example 4 was changed to 2.20 g and the amount of methanol added midway was changed to 2.18 g to prepare a fluorine-containing polymer having a different melt index a; a carboxylic acid-type fluorine-containing polymer was thereby obtained. The resulting fluorine-containing polymer was pelletized with a twin screw extruder. The EW of the fluorine-containing polymer was 1137 g/eq.

The melt index a of the carboxylic acid-type fluorine-containing polymer was 31.25 (g/10 min), and the melt index b was 21.06 (g/10 min). From a and b, c was calculated; c was 1.02 and c $\leq$ 0.027 $\times$ a + 0.19. The results are shown in Figure 2 in which the results are plotted where the ordinate is c, and the abscissa is a.

A cation exchange membrane was prepared in the same manner as in Example 1 except that the carboxylic type fluorine-containing polymer was used in Example 1. The resulting cation exchange membrane was wetted with 2% by mass sodium bicarbonate, and the ion exchange membrane was evaluated for long-term electrolysis in zero gap electrolysis; as a result, the stability of current efficiency was ranked as B.

As in Example 1, part of the cation exchange membrane was used in measurement of the melt index; the hydrolyzed product of the carboxylic acid-type fluorine-containing polymer was peeled, and methyl esterification treatment was performed. It was confirmed in the same manner as in Example 1 that no ion exchange group was present in the resulting carboxylic acid-type fluorine-containing polymer. The EW of the methyl esterified carboxylic acid-type fluorine-containing polymer was 1142 g/eq.

The melt index a of the methyl esterified carboxylic acid-type fluorine-containing polymer was 36.25 (g/10 min), and the melt index b was 24.63 (g/10 min). From a and b, c was calculated; c was 1.16 and c $\leq$ 0.027 $\times$ a + 0.19. The results are shown in Figure 3 in which the results are plotted where the ordinate is c, and the abscissa is a.

[Example 8]

Polymerization was performed in the same manner as in Example 4 except that the amount of methanol added in the initial stage in Example 4 was changed to 2.14 g and the amount of methanol added midway was changed to 2.12 g to prepare a fluorine-containing polymer having a different melt index a; a carboxylic acid-type fluorine-containing polymer was thereby obtained. The resulting fluorine-containing polymer was pelletized with a twin screw extruder. The EW of the fluorine-containing polymer was 1152 g/eq.

The melt index a of the carboxylic acid-type fluorine-containing polymer was 28.96 (g/10 min), and the melt index b was 19.73 (g/10 min). From a and b, c was calculated; c was 0.92 and $c \leq 0.027 \times a + 0.19$. The results are shown in Figure 2 in which the results are plotted where the ordinate is c, and the abscissa is a.

A cation exchange membrane was prepared in the same manner as in Example 1 except that the carboxylic type fluorine-containing polymer was used in Example 1. The resulting cation exchange membrane was wetted with 2% by mass sodium bicarbonate, and the ion exchange membrane was evaluated for long-term electrolysis in zero gap electrolysis; as a result, the stability of current efficiency was ranked as B.

As in Example 1, part of the cation exchange membrane was used in measurement of the melt index; the hydrolyzed product of the carboxylic acid-type fluorine-containing polymer was peeled, and methyl esterification treatment was performed. It was confirmed in the same manner as in Example 1 that no ion exchange group was present in the resulting carboxylic acid-type fluorine-containing polymer. The EW of the methyl esterified carboxylic acid-type fluorine-containing polymer was 1148 g/eq.

The melt index a of the methyl esterified carboxylic acid-type fluorine-containing polymer was 29.51 (g/10 min), and the melt index b was 19.91 (g/10 min). From a and b, c was calculated; c was 0.96 and $c \leq 0.027 \times a + 0.19$. The results are shown in Figure 3 in which the results are plotted where the ordinate is c, and the abscissa is a.

[Example 9]

Polymerization was performed in the same manner as in Example 4 except that the amount of methanol added in the initial stage in Example 4 was changed to 1.81 g and the amount of methanol added midway was changed to 1.79 g to prepare a fluorine-containing polymer having a different melt index a; a carboxylic acid-type fluorine-containing polymer was thereby obtained. The resulting fluorine-containing polymer was pelletized with a twin screw extruder. The EW of the fluorine-containing polymer was 1130 g/eq.

The melt index a of the carboxylic acid-type fluorine-containing polymer was 18.96 (g/10 min), and the melt index b was 12.44 (g/10 min). From a and b, c was calculated; c was 0.65 and $c \leq 0.027 \times a + 0.19$. The results are shown in Figure 2 in which the results are plotted where the ordinate is c, and the abscissa is a.

The expression of the straight line was calculated from the six points in Examples 4 to 9 by least squares approximation; it was $c = 0.027 \times a + 0.164$.

A cation exchange membrane was prepared in the same manner as in Example 1 except that the carboxylic type fluorine-containing polymer was used in Example 1. The resulting cation exchange membrane was wetted with 2% by mass sodium bicarbonate, and the ion exchange membrane was evaluated for long-term electrolysis in zero gap electrolysis; as a result, the stability of current efficiency was ranked as B.

As in Example 1, part of the cation exchange membrane was used in measurement of the melt index; the hydrolyzed product of the carboxylic acid-type fluorine-containing polymer was peeled, and methyl esterification treatment was performed. It was confirmed in the same manner as in Example 1 that no ion exchange group was present in the resulting carboxylic acid-type fluorine-containing polymer. The EW of the methyl esterified carboxylic acid-type fluorine-containing polymer was 1130 g/eq.

The melt index a of the methyl esterified carboxylic acid-type fluorine-containing polymer was 19.38 (g/10 min), and the melt index b was 12.61 (g/10 min). From a and b, c was calculated; c was 0.68 and $c \leq 0.027 \times a + 0.19$. The results are shown in Figure 3 in which the results are plotted where the ordinate is c, and the abscissa is a.

The expression of the straight line was calculated from the six points in Examples 4 to 9 by least squares approximation; it was $c = 0.027 \times a + 0.172$.

[Example 10]

Solution polymerization was performed to obtain a carboxylic acid-type fluorine-containing polymer. A stirring blade of an anchor type was used. 4300 g of $CF_2=CFOCF_2CF(CF_3)O(CF_2)_2COOCH_3$ and 13086 g of HFC-43-10mee were placed in a 20-L autoclave made of stainless steel. The inside of the container was sufficiently purged with nitrogen, and was further purged with $CF_2=CF_2$ (TFE); the inside of the container was heated to stabilize the inner temperature of the container at 35°C; the inside of the container was pressurized with TFE to 0.239 MPa-G (gauge pressure). Here, 86 g of a solution containing 5% of $(CF_3CF_2CF_2COO)_2$ in HFC43-10mee as a polymerization initiator and 1.95 g of methanol as a chain transfer agent were placed to initiate the reaction. While TFE was intermittently fed with stirring at 35°C, 1.64 g of methanol was placed midway to drop the TFE pressure from the initial pressure of 0.239 MPa-G to the end pressure of 0.214 MPa-G; when 554 g of TFE was fed, polymerization was terminated. After the non-reacted TFE was discharged to the outside of the system, methanol was added to the resulting polymerization solution to aggregate and separate a fluorine-containing polymer. After drying, 960 g of a carboxylic acid-type fluorine-containing polymer was obtained. The concentration of the fluorine-containing polymer in the polymerization solution was calculated from the amount of the resulting fluorine-containing polymer; it was 5.3% by mass. The resulting fluorine-containing polymer was

pelletized with a twin screw extruder. The EW of the fluorine-containing polymer was 1145 g/eq.

The melt index a of the carboxylic acid-type fluorine-containing polymer was 35.33 (g/10 min), and the melt index b was 24.93 (g/10 min). From a and b, c was calculated; c was 1.04 and $c \leq 0.027 \times a + 0.19$. The results are shown in Figure 2 in which the results are plotted where the ordinate is c, and the abscissa is a.

A cation exchange membrane was prepared in the same manner as in Example 1 except that the carboxylic type fluorine-containing polymer was used in Example 1. The resulting cation exchange membrane was wetted with 2% by mass sodium bicarbonate, and the ion exchange membrane was evaluated for long-term electrolysis in zero gap electrolysis; as a result, the stability of current efficiency was ranked as A.

As in Example 1, part of the cation exchange membrane was used in measurement of the melt index; the hydrolyzed product of the carboxylic acid-type fluorine-containing polymer was peeled, and methyl esterification treatment was performed. It was confirmed in the same manner as in Example 1 that no ion exchange group was present in the resulting carboxylic acid-type fluorine-containing polymer. The EW of the methyl esterified carboxylic acid-type fluorine-containing polymer was 1153 g/eq.

The melt index a of the methyl esterified carboxylic acid-type fluorine-containing polymer was 39.23 (g/10 min), and the melt index b was 27.76 (g/10 min). From a and b, c was calculated; c was 1.15 and $c \leq 0.027 \times a + 0.19$. The results are shown in Figure 3 in which the results are plotted where the ordinate is c, and the abscissa is a.

[Example 11]

Polymerization was performed in the same manner as in Example 10 except that the amount of methanol added in the initial stage in Example 10 was changed to 2.06 g and the amount of methanol added midway was changed to 1.73 g to prepare a fluorine-containing polymer having a different melt index a; a carboxylic acid-type fluorine-containing polymer was thereby obtained. The resulting fluorine-containing polymer was pelletized with a twin screw extruder. The EW of the fluorine-containing polymer was 1149 g/eq.

The melt index a of the carboxylic acid-type fluorine-containing polymer was 42.24 (g/10 min), and the melt index b was 29.96 (g/10 min). From a and b, c was calculated; c was 1.23 and $c \leq 0.027 \times a + 0.19$. The results are shown in Figure 2 in which the results are plotted where the ordinate is c, and the abscissa is a.

A cation exchange membrane was prepared in the same manner as in Example 1 except that the carboxylic type fluorine-containing polymer was used in Example 1. The resulting cation exchange membrane was wetted with 2% by mass sodium bicarbonate, and the ion exchange membrane was evaluated for long-term electrolysis in zero gap electrolysis; as a result, the stability of current efficiency was ranked as A.

As in Example 1, part of the cation exchange membrane was used in measurement of the melt index; the hydrolyzed product of the carboxylic acid-type fluorine-containing polymer was peeled, and methyl esterification treatment was performed. It was confirmed in the same manner as in Example 1 that no ion exchange group was present in the resulting carboxylic acid-type fluorine-containing polymer. The EW of the methyl esterified carboxylic acid-type fluorine-containing polymer was 1152 g/eq.

The melt index a of the methyl esterified carboxylic acid-type fluorine-containing polymer was 48.53 (g/10 min), and the melt index b was 34.54 (g/10 min). From a and b, c was calculated; c was 1.40 and $c \leq 0.027 \times a + 0.19$. The results are shown in Figure 3 in which the results are plotted where the ordinate is c, and the abscissa is a.

[Example 12]

Polymerization was performed in the same manner as in Example 10 except that the amount of methanol added in the initial stage in Example 10 was changed to 1.37 g and the amount of methanol added midway was changed to 1.15 g to prepare a fluorine-containing polymer having a different melt index a; a carboxylic acid-type fluorine-containing polymer was thereby obtained. The resulting fluorine-containing polymer was pelletized with a twin screw extruder. The EW of the fluorine-containing polymer was 1155 g/eq.

The melt index a of the carboxylic acid-type fluorine-containing polymer was 14.13 (g/10 min), and the melt index b was 9.47 (g/10 min). From a and b, c was calculated; c was 0.47 and $c \leq 0.027 \times a + 0.19$. The results are shown in Figure 2 in which the results are plotted where the ordinate is c, and the abscissa is a.

A cation exchange membrane was prepared in the same manner as in Example 1 except that the carboxylic type fluorine-containing polymer was used in Example 1. The resulting cation exchange membrane was wetted with 2% by mass sodium bicarbonate, and the ion exchange membrane was evaluated for long-term electrolysis in zero gap electrolysis; as a result, the stability of current efficiency was ranked as A.

As in Example 1, part of the cation exchange membrane was used in measurement of the melt index; the hydrolyzed product of the carboxylic acid-type fluorine-containing polymer was peeled, and methyl esterification treatment was performed. It was confirmed in the same manner as in Example 1 that no ion exchange group was present in the resulting carboxylic acid-type fluorine-containing polymer. The EW of the methyl esterified carboxylic acid-type fluorine-containing polymer was 1158 g/eq.

The melt index a of the methyl esterified carboxylic acid-type fluorine-containing polymer was 17.22 (g/10 min), and the melt index b was 11.70 (g/10 min). From a and b, c was calculated; c was 0.55 and $c \leq 0.027 \times a + 0.19$. The results are shown in Figure 3 in which the results are plotted where the ordinate is c, and the abscissa is a.

[Example 13]

Solution polymerization was performed to obtain a carboxylic acid-type fluorine-containing polymer. A stirring blade of an anchor type was used. 4300 g of $CF_2=CFOCF_2CF(CF_3)O(CF_2)_2COOCH_3$ and 13086 g of HFC-43-10mee were placed in a 20-L autoclave made of stainless steel. The inside of the container was sufficiently purged with nitrogen, and was further purged with $CF_2=CF_2$ (TFE); the inside of the container was heated to stabilize the inner temperature of the container at 35°C; the inside of the container was pressurized with TFE to 0.260 MPa-G (gauge pressure). Here, 86 g of a solution containing 5% of $(CF_3CF_2CF_2COO)_2$ in HFC43-10mee as a polymerization initiator and 3.13 g of methanol as a chain transfer agent were placed to initiate the reaction. While TFE was intermittently fed with stirring at 35°C, 2.28 g of methanol was placed midway to drop the TFE pressure from the initial pressure of 0.260 MPa-G to the end pressure of 0.237 MPa-G; when 556 g of TFE was fed, polymerization was terminated. After the non-reacted TFE was discharged to the outside of the system, methanol was added to the resulting polymerization solution to aggregate and separate a fluorine-containing polymer. After drying, 912 g of a carboxylic acid-type fluorine-containing polymer was obtained. The concentration of the fluorine-containing polymer in the polymerization solution was calculated from the amount of the resulting fluorine-containing polymer; it was 5.0% by mass. The resulting fluorine-containing polymer was pelletized with a twin screw extruder. The EW of the fluorine-containing polymer was 1251 g/eq.

The melt index a of the carboxylic acid-type fluorine-containing polymer was 27.49 (g/10 min), and the melt index b was 19.99 (g/10 min). From a and b, c was calculated; c was 0.75 and $c \leq 0.027 \times a + 0.19$. The results are shown in Figure 2 in which the results are plotted where the ordinate is c, and the abscissa is a.

A cation exchange membrane was prepared in the same manner as in Example 1 except that the carboxylic type fluorine-containing polymer was used in Example 1. The resulting cation exchange membrane was wetted with 2% by mass sodium bicarbonate, and the ion exchange membrane was evaluated for long-term electrolysis in zero gap electrolysis; as a result, the stability of current efficiency was ranked as A.

As in Example 1, part of the cation exchange membrane was used in measurement of the melt index; the hydrolyzed product of the carboxylic acid-type fluorine-containing polymer was peeled, and methyl esterification treatment was performed. It was confirmed in the same manner as in Example 1 that no ion exchange group was present in the resulting carboxylic acid-type fluorine-containing polymer. The EW of the methyl esterified carboxylic acid-type fluorine-containing polymer was 1248 g/eq.

The melt index a of the methyl esterified carboxylic acid-type fluorine-containing polymer was 29.12 (g/10 min), and the melt index b was 21.17 (g/10 min). From a and b, c was calculated; c was 0.80 and $c \leq 0.027 \times a + 0.19$. The results are shown in Figure 3 in which the results are plotted where the ordinate is c, and the abscissa is a.

[Example 14]

Solution polymerization was performed to obtain a carboxylic acid-type fluorine-containing polymer. A stirring blade of an anchor type was used. 3870 g of $CF_2=CFOCF_2CF(CF_3)O(CF_2)_2COOCH_3$ and 11812 g of HFC-43-10mee were placed in a 20-L autoclave made of stainless steel. The inside of the container was sufficiently purged with nitrogen, and was further purged with $CF_2=CF_2$(TFE); the inside of the container was heated to stabilize the inner temperature of the container at 35°C; the inside of the container was pressurized with TFE to 0.242 MPa-G (gauge pressure). Here, 77 g of a solution containing 5% of $(CF_3CF_2CF_2COO)_2$ in HFC43-10mee as a polymerization initiator and 0.87 g of methanol as a chain transfer agent were placed to initiate the reaction. While TFE was intermittently fed with stirring at 35°C, 0.61 g of methanol was placed midway to drop the TFE pressure from the initial pressure of 0.242 MPa-G to the end pressure of 0.221 MPa-G; when 423 g of TFE was fed, polymerization was terminated. After the non-reacted TFE was discharged to the outside of the system, methanol was added to the resulting polymerization solution to aggregate and separate a fluorine-containing polymer. After drying, 730 g of a carboxylic acid-type fluorine-containing polymer was obtained. The concentration of the fluorine-containing polymer in the polymerization solution was calculated from the amount of the resulting fluorine-containing polymer; it was 4.5% by mass. The resulting fluorine-containing polymer was pelletized with a twin screw extruder. The EW of the fluorine-containing polymer was 1160 g/eq.

The melt index a of the carboxylic acid-type fluorine-containing polymer was 5.60 (g/10 min), and the melt index b was 5.07 (g/10 min). From a and b, c was calculated; c was 0.05 and $c \leq 0.027 \times a + 0.19$. The results are shown in Figure 2 in which the results are plotted where the ordinate is c, and the abscissa is a.

A cation exchange membrane was prepared in the same manner as in Example 1 except that the carboxylic type fluorine-containing polymer was used in Example 1. The resulting cation exchange membrane was wetted with 2%

by mass sodium bicarbonate, and the ion exchange membrane was evaluated for long-term electrolysis in zero gap electrolysis; as a result, the stability of current efficiency was ranked as A.

As in Example 1, part of the cation exchange membrane was used in measurement of the melt index; the hydrolyzed product of the carboxylic acid-type fluorine-containing polymer was peeled, and methyl esterification treatment was performed. It was confirmed in the same manner as in Example 1 that no ion exchange group was present in the resulting carboxylic acid-type fluorine-containing polymer. The EW of the methyl esterified carboxylic acid-type fluorine-containing polymer was 1162 g/eq.

The melt index a of the methyl esterified carboxylic acid-type fluorine-containing polymer was 6.23 (g/10 min), and the melt index b was 5.54 (g/10 min). From a and b, c was calculated; c was 0.07 and $c \leq 0.027 \times a + 0.19$. The results are shown in Figure 3 in which the results are plotted where the ordinate is c, and the abscissa is a.

[Example 15]

Polymerization was performed in the same manner as in Example 14 except that the amount of methanol added in the initial stage in Example 14 was changed to 1.79 g and the amount of methanol added midway was changed to 1.25 g to prepare a fluorine-containing polymer having a different melt index a; a carboxylic acid-type fluorine-containing polymer was thereby obtained. The resulting fluorine-containing polymer was pelletized with a twin screw extruder. The EW of the fluorine-containing polymer was 1165 g/eq.

The melt index a of the carboxylic acid-type fluorine-containing polymer was 28.03 (g/10 min), and the melt index b was 21.42 (g/10 min). From a and b, c was calculated; c was 0.66 and $c \leq 0.027 \times a + 0.19$. The results are shown in Figure 2 in which the results are plotted where the ordinate is c, and the abscissa is a.

A cation exchange membrane was prepared in the same manner as in Example 1 except that the carboxylic type fluorine-containing polymer was used in Example 1. The resulting cation exchange membrane was wetted with 2% by mass sodium bicarbonate, and the ion exchange membrane was evaluated for long-term electrolysis in zero gap electrolysis; as a result, the stability of current efficiency was ranked as A.

As in Example 1, part of the cation exchange membrane was used in measurement of the melt index; the hydrolyzed product of the carboxylic acid-type fluorine-containing polymer was peeled, and methyl esterification treatment was performed. It was confirmed in the same manner as in Example 1 that no ion exchange group was present in the resulting carboxylic acid-type fluorine-containing polymer. The EW of the methyl esterified carboxylic acid-type fluorine-containing polymer was 1172 g/eq.

The melt index a of the methyl esterified carboxylic acid-type fluorine-containing polymer was 29.98 (g/10 min), and the melt index b was 22.86 (g/10 min). From a and b, c was calculated; c was 0.71 and $c \leq 0.027 \times a + 0.19$. The results are shown in Figure 3 in which the results are plotted where the ordinate is c, and the abscissa is a.

[Example 16]

Solution polymerization was performed to obtain a carboxylic acid-type fluorine-containing polymer. A stirring blade of an anchor type was used. 3440 g of $CF_2=CFOCF_2CF(CF_3)O(CF_2)_2COOCH_3$ and 10538 g of HFC-43-10mee were placed in a 20-L autoclave made of stainless steel. The inside of the container was sufficiently purged with nitrogen, and was further purged with $CF_2=CF_2$ (TFE); the inside of the container was heated to stabilize the inner temperature of the container at 35°C; the inside of the container was pressurized with TFE to 0.250 MPa-G (gauge pressure). Here, 69 g of a solution containing 5% of $(CF_3CF_2CF_2COO)_2$ in HFC43-10mee as a polymerization initiator and 2.22 g of methanol as a chain transfer agent were placed to initiate the reaction. While TFE was intermittently fed with stirring at 35°C, 1.49 g of methanol was placed midway to drop the TFE pressure from the initial pressure of 0.250 MPa-G to the end pressure of 0.228 MPa-G; when 377 g of TFE was fed, polymerization was terminated. After the non-reacted TFE was discharged to the outside of the system, methanol was added to the resulting polymerization solution to aggregate and separate a fluorine-containing polymer. After drying, 641 g of a carboxylic acid-type fluorine-containing polymer was obtained. The concentration of the fluorine-containing polymer in the polymerization solution was calculated from the amount of the resulting fluorine-containing polymer; it was 4.4% by mass. The resulting fluorine-containing polymer was pelletized with a twin screw extruder. The EW of the fluorine-containing polymer was 1198 g/eq.

The melt index a of the carboxylic acid-type fluorine-containing polymer was 45.10 (g/10 min), and the melt index b was 36.24 (g/10 min). From a and b, c was calculated; c was 0.89 and $c \leq 0.027 \times a + 0.19$. The results are shown in Figure 2 in which the results are plotted where the ordinate is c, and the abscissa is a.

A cation exchange membrane was prepared in the same manner as in Example 1 except that the carboxylic type fluorine-containing polymer was used in Example 1. The resulting cation exchange membrane was wetted with 2% by mass sodium bicarbonate, and the ion exchange membrane was evaluated for long-term electrolysis in zero gap electrolysis; as a result, the stability of current efficiency was ranked as A.

As in Example 1, part of the cation exchange membrane was used in measurement of the melt index; the

hydrolyzed product of the carboxylic acid-type fluorine-containing polymer was peeled, and methyl esterification treatment was performed. It was confirmed in the same manner as in Example 1 that no ion exchange group was present in the resulting carboxylic acid-type fluorine-containing polymer. The EW of the methyl esterified carboxylic acid-type fluorine-containing polymer was 1192 g/eq.

The melt index a of the methyl esterified carboxylic acid-type fluorine-containing polymer was 48.00 (g/10 min), and the melt index b was 38.34 (g/10 min). From a and b, c was calculated; c was 0.97 and $c \leq 0.027 \times a + 0.19$. The results are shown in Figure 3 in which the results are plotted where the ordinate is c, and the abscissa is a.

[Comparative Example 1]

Solution polymerization was performed to obtain a carboxylic acid-type fluorine-containing polymer. A stirring blade of a paddle type was used. 6020 g of $CF_2=CFOCF_2CF(CF_3)O(CF_2)_2COOCH_3$ and 18180 g of HFC-43-10mee were placed in a 20-L autoclave made of stainless steel. The inside of the container was sufficiently purged with nitrogen, and was further purged with $CF_2=CF_2$ (TFE); the inside of the container was heated to stabilize the inner temperature of the container at 35°C; the inside of the container was pressurized with TFE to 0.242 MPa-G (gauge pressure). Here, 120 g of a solution containing 5% of $(CF_3CF_2CF_2COO)_2$ in HFC43-10mee as a polymerization initiator and 2.75 g of methanol as a chain transfer agent were placed to initiate the reaction. While TFE was intermittently fed with stirring at 35°C, 3.07 g of methanol was placed midway to drop the TFE pressure from the initial pressure of 0.242 MPa-G to the end pressure of 0.208 MPa-G; when 1065 g of TFE was fed, polymerization was terminated. After the non-reacted TFE was discharged to the outside of the system, methanol was added to the resulting polymerization solution to aggregate and separate a fluorine-containing polymer. After drying, 1813 g of a carboxylic acid-type fluorine-containing polymer was obtained. The concentration of the fluorine-containing polymer in the polymerization solution was calculated from the amount of the resulting fluorine-containing polymer; it was 7.1% by mass. The resulting fluorine-containing polymer was pelletized with a twin screw extruder. The EW of the fluorine-containing polymer was 1158 g/eq.

The melt index a of the carboxylic acid-type fluorine-containing polymer was 27.82 (g/10 min), and the melt index b was 17.98 (g/10 min). From a and b, c was calculated; c was 0.98 and $c > 0.027 \times a + 0.19$. The results are shown in Figure 2 in which the results are plotted where the ordinate is c, and the abscissa is a.

A cation exchange membrane was prepared in the same manner as in Example 1 except that the carboxylic type fluorine-containing polymer was used in Example 1. The resulting cation exchange membrane was wetted with 2% by mass sodium bicarbonate, and the ion exchange membrane was evaluated for long-term electrolysis in zero gap electrolysis; as a result, the stability of current efficiency was ranked as C.

As in Example 1, part of the cation exchange membrane was used in measurement of the melt index; the hydrolyzed product of the carboxylic acid-type fluorine-containing polymer was peeled, and methyl esterification treatment was performed. It was confirmed in the same manner as in Example 1 that no ion exchange group was present in the resulting carboxylic acid-type fluorine-containing polymer. The EW of the methyl esterified carboxylic acid-type fluorine-containing polymer was 1158 g/eq.

The melt index a of the methyl esterified carboxylic acid-type fluorine-containing polymer was 29.31 (g/10 min), and the melt index b was 18.95 (g/10 min). From a and b, c was calculated; c was 1.04 and $c > 0.027 \times a + 0.19$. The results are shown in Figure 3 in which the results are plotted where the ordinate is c, and the abscissa is a.

[Comparative Example 2]

Polymerization was performed in the same manner as in Comparative Example 1 except that the amount of methanol added in the initial stage in Comparative Example 1 was changed to 1.10 g and the amount of methanol added midway was changed to 1.23 g to prepare a fluorine-containing polymer having a different melt index a; a carboxylic acid-type fluorine-containing polymer was thereby obtained. The resulting fluorine-containing polymer was pelletized with a twin screw extruder. The EW of the fluorine-containing polymer was 1142 g/eq.

The melt index a of the carboxylic acid-type fluorine-containing polymer was 4.35 (g/10 min), and the melt index b was 0.72 (g/10 min). From a and b, c was calculated; c was 0.36 and $c > 0.027 \times a + 0.19$. The results are shown in Figure 2 in which the results are plotted where the ordinate is c, and the abscissa is a.

A cation exchange membrane was prepared in the same manner as in Example 1 except that the carboxylic type fluorine-containing polymer was used in Example 1. The resulting cation exchange membrane was wetted with 2% by mass sodium bicarbonate, and the ion exchange membrane was evaluated for long-term electrolysis in zero gap electrolysis; as a result, the stability of current efficiency was ranked as C.

As in Example 1, part of the cation exchange membrane was used in measurement of the melt index; the hydrolyzed product of the carboxylic acid-type fluorine-containing polymer was peeled, and methyl esterification treatment was performed. It was confirmed in the same manner as in Example 1 that no ion exchange group was present in the resulting carboxylic acid-type fluorine-containing polymer. The EW of the methyl esterified carboxylic acid-type fluorine-containing polymer was 1140 g/eq.

The melt index a of the methyl esterified carboxylic acid-type fluorine-containing polymer was 4.82 (g/10 min), and the melt index b was 0.90 (g/10 min). From a and b, c was calculated; c was 0.39 and c > 0.027 × a + 0.19. The results are shown in Figure 3 in which the results are plotted where the ordinate is c, and the abscissa is a.

[Comparative Example 3]

Polymerization was performed in the same manner as in Comparative Example 1 except that the amount of methanol added in the initial stage in Comparative Example 1 was changed to 3.12 g and the amount of methanol added midway was changed to 3.49 g to prepare a fluorine-containing polymer having a different melt index a; a carboxylic acid-type fluorine-containing polymer was thereby obtained. The resulting fluorine-containing polymer was pelletized with a twin screw extruder. The EW of the fluorine-containing polymer was 1158 g/eq.

The melt index a of the carboxylic acid-type fluorine-containing polymer was 42.31 (g/10 min), and the melt index b was 28.17 (g/10 min). From a and b, c was calculated; c was 1.41 and c > 0.027 × a + 0.19. The results are shown in Figure 2 in which the results are plotted where the ordinate is c, and the abscissa is a.

A cation exchange membrane was prepared in the same manner as in Example 1 except that the carboxylic type fluorine-containing polymer was used in Example 1. The resulting cation exchange membrane was wetted with 2% by mass sodium bicarbonate, and the ion exchange membrane was evaluated for long-term electrolysis in zero gap electrolysis; as a result, the stability of current efficiency was ranked as C.

As in Example 1, part of the cation exchange membrane was used in measurement of the melt index; the hydrolyzed product of the carboxylic acid-type fluorine-containing polymer was peeled, and methyl esterification treatment was performed. It was confirmed in the same manner as in Example 1 that no ion exchange group was present in the resulting carboxylic acid-type fluorine-containing polymer. The EW of the methyl esterified carboxylic acid-type fluorine-containing polymer was 1150 g/eq.

The melt index a of the methyl esterified carboxylic acid-type fluorine-containing polymer was 47.29 (g/10 min), and the melt index b was 31.74 (g/10 min). From a and b, c was calculated; c was 1.56 and c > 0.027 × a + 0.19. The results are shown in Figure 3 in which the results are plotted where the ordinate is c, and the abscissa is a.

[Comparative Example 4]

Solution polymerization was performed to obtain a carboxylic acid-type fluorine-containing polymer. A stirring blade of a paddle type was used. 6020 g of $CF_2=CFOCF_2CF(CF_3)O(CF_2)_2COOCH_3$ and 18180 g of HFC-43-10mee were placed in a 20-L autoclave made of stainless steel. The inside of the container was sufficiently purged with nitrogen, and was further purged with $CF_2=CF_2$ (TFE); the inside of the container was heated to stabilize the inner temperature of the container at 35°C; the inside of the container was pressurized with TFE to 0.256 MPa-G (gauge pressure). Here, 120 g of a solution containing 5% of $(CF_3CF_2CF_2COO)_2$ in HFC43-10mee as a polymerization initiator and 3.98 g of methanol as a chain transfer agent were placed to initiate the reaction. While TFE was intermittently fed with stirring at 35°C, 4.78 g of methanol was placed midway to drop the TFE pressure from the initial pressure of 0.256 MPa-G to the end pressure of 0.218 MPa-G; when 1264 g of TFE was fed, polymerization was terminated. After the non-reacted TFE was discharged to the outside of the system, methanol was added to the resulting polymerization solution to aggregate and separate a fluorine-containing polymer. After drying, 2069 g of a carboxylic acid-type fluorine-containing polymer was obtained. The concentration of the fluorine-containing polymer in the polymerization solution was calculated from the amount of the resulting fluorine-containing polymer; it was 8.1% by mass. The resulting fluorine-containing polymer was pelletized with a twin screw extruder. The EW of the fluorine-containing polymer was 1233 g/eq.

The melt index a of the carboxylic acid-type fluorine-containing polymer was 24.95 (g/10 min), and the melt index b was 14.70 (g/10 min). From a and b, c was calculated; c was 1.03 and c > 0.027 × a + 0.19. The results are shown in Figure 2 in which the results are plotted where the ordinate is c, and the abscissa is a.

A cation exchange membrane was prepared in the same manner as in Example 1 except that the carboxylic type fluorine-containing polymer was used in Example 1. The resulting cation exchange membrane was wetted with 2% by mass sodium bicarbonate, and the ion exchange membrane was evaluated for long-term electrolysis in zero gap electrolysis; as a result, the stability of current efficiency was ranked as C.

As in Example 1, part of the cation exchange membrane was used in measurement of the melt index; the hydrolyzed product of the carboxylic acid-type fluorine-containing polymer was peeled, and methyl esterification treatment was performed. It was confirmed in the same manner as in Example 1 that no ion exchange group was present in the resulting carboxylic acid-type fluorine-containing polymer. The EW of the methyl esterified carboxylic acid-type fluorine-containing polymer was 1228 g/eq.

The melt index a of the methyl esterified carboxylic acid-type fluorine-containing polymer was 28.26 (g/10 min), and the melt index b was 17.01 (g/10 min). From a and b, c was calculated; c was 1.13 and c > 0.027 × a + 0.19. The

results are shown in Figure 3 in which the results are plotted where the ordinate is c, and the abscissa is a.

In Figure 2, the intercepts were adjusted using the inclination of the expression of linear approximation in Examples 4 to 9 to determine the boundary line between Comparative Examples and Examples. The expression of the boundary line is c = 0.027 × a + 0.19.

In Figure 3, the intercepts were adjusted using the inclination of the expression of linear approximation in Examples 4 to 9 to determine the boundary line between Comparative Examples and Examples. The expression of the boundary line is c = 0.027 × a + 0.19.

## Industrial Applicability

The fluorine-containing polymer according to the present invention is useful to production of cation exchange membranes used in alkali chloride electrolysis or the like. The cation exchange membrane according to the present invention is useful as a cation exchange membrane used in alkali chloride electrolysis or the like.

## Reference Signs List

1: cation exchange membrane, 100: electrolysis vessel, 200: anode, 300: cathode.

## Claims

1. A cation exchange membrane comprising a fluorine-containing polymer containing a tetrafluoroethylene unit and a perfluoroethylene unit having a carboxylic acid-type ion exchange group,
wherein the melt index a of a fluorine-containing polymer obtained by esterifying the carboxylic acid-type ion exchange group with methanol is 3 to 50 g/10 min, the melt index a being measured according to JIS K-7210 under conditions at 270°C, a load of 2.16 kg and an orifice inner diameter of 2.09 mm, and the melt index a and the melt index b of the fluorine-containing polymer obtained by esterifying the carboxylic acid-type ion exchange group with methanol satisfy the relation represented by the following expression (1), the melt index b being measured under conditions at 260°C, a load of 2.16 kg and an orifice inner diameter of 2.09 mm:

$$(a - b)/(270 - 260) \leq 0.027 \times a + 0.19 \quad (1).$$

2. The cation exchange membrane according to claim 1, wherein the perfluoroethylene unit having a carboxylic acid-type ion exchange group is a unit represented by the following formula (A):

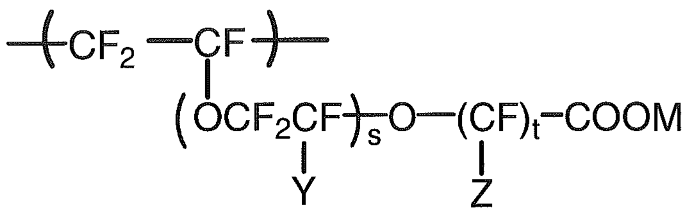

(A)

wherein s represents an integer of 0 to 2, t represents an integer of 1 to 12, Y and Z each independently represent F or $CF_3$, and M represents an alkali metal.

3. The cation exchange membrane according to claim 1 or 2, wherein the melt index a and the melt index b satisfy the relation represented by the following expression (2):

$$(a - b)/(270 - 260) \leq 0.027 \times a + 0.14 \ (2).$$

4. The cation exchange membrane according to claim 1 or 2, wherein the melt index a and the melt index b satisfy the relation represented by the following expression (3):

$$(a - b)/(270 - 260) \leq 0.027 \times a + 0.09 \ (3).$$

5. The cation exchange membrane according to any one of claims 1 to 4, wherein the melt index a is 4 to 30 g/10 min, preferably wherein the melt index a is 5 to 20 g/10 min.

6. The cation exchange membrane according to any one of claims 1 to 5, wherein the equivalent weight of the fluorine-containing polymer obtained by esterifying the carboxylic acid-type ion exchange group with methanol is 900 to 1400 g/eq., preferably wherein the equivalent weight of the fluorine-containing polymer obtained by esterifying the carboxylic acid-type ion exchange group with methanol is 1100 to 1300 g/eq, whereby the equivalent weight is defined as [g-copolymer composition/eq.-functional group].

7. A fluorine-containing polymer comprising a tetrafluoroethylene unit and a perfluoroethylene unit having a methoxycarbonyl group, wherein the melt index a measured under conditions at 270°C, a load of 2.16 kg and an orifice inner diameter of 2.09 mm is 3 to 50 g/10 min, and the melt index a and the melt index b measured under conditions at 260°C, a load of 2.16 kg and an orifice inner diameter of 2.09 mm satisfy the relation represented by the following expression (1):

$$(a - b)/(270 - 260) \leq 0.027 \times a + 0.19 \quad (1).$$

8. The fluorine-containing polymer according to claim 7, wherein the perfluoroethylene unit having a methoxycarbonyl group is a unit represented by the following formula (B):

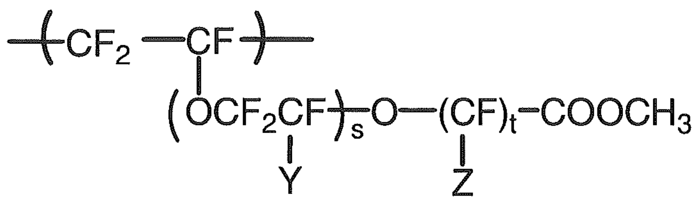

(B)

wherein s represents an integer of 0 to 2, t represents an integer of 1 to 12, and Y and Z each independently represent F or $CF_3$.

9. The fluorine-containing polymer according to claim 7 or 8, wherein the melt index a and the melt index b satisfy the relation represented by the following expression (2):

$$(a - b)/(270 - 260) \leq 0.027 \times a + 0.14 \quad (2).$$

10. The fluorine-containing polymer according to claim 7 or 8, wherein the melt index a and the melt index b satisfy the relation represented by the following expression (3):

$$(a - b)/(270 - 260) \leq 0.027 \times a + 0.09 \quad (3).$$

11. The fluorine-containing polymer according to any one of claims 7 to 10, wherein the melt index a is 4 to 30 g/10 min, preferably wherein the melt index a is 5 to 20 g/10 min.

12. The fluorine-containing polymer according to any one of claims 7 to 11, wherein an equivalent weight is 900 to 1400 g/eq, preferably wherein an equivalent weight is 1100 to 1300 g/eq, whereby the equivalent weight is defined as [g-copolymer composition/eq.-functional group].

13. An electrolysis vessel comprising:

at least an anode, a cathode and the cation exchange membrane according to any one of claims 1 to 6 disposed

between the anode and the cathode.

**Patentansprüche**

1. Kationenaustauschermembran, die ein fluorhaltiges Polymer umfasst, das eine Tetrafluorethylen-Einheit und eine Perfluorethylen-Einheit mit einer Ionenaustauschergruppe des Carbonsäuretyps enthält,
wobei der Schmelzindex a eines fluorhaltigen Polymers, das durch Verestern der Ionenaustauschergruppe des Carbonsäuretyps mit Methanol erhalten wird, 3 bis 50 g/10 min beträgt, wobei der Schmelzindex a gemäß JIS K-7210 unter den Bedingungen 270 °C bei einer Last von 2,16 kg und einem Innendurchmesser der Öffnung von 2,09 mm gemessen wird und der Schmelzindex a und der Schmelzindex b des fluorhaltigen Polymers, das durch Verestern der Ionenaustauschergruppe des Carbonsäuretyps mit Methanol erhalten wird, der Beziehung genügen, die durch den folgenden Ausdruck (1) dargestellt wird, wobei der Schmelzindex b unter den Bedingungen 260 °C bei einer Last von 2,16 kg und einem Innendurchmesser der Öffnung von 2,09 mm gemessen wird:

$$(a - b)/(270 - 260) \leq 0{,}027 \times a + 0{,}19 \qquad (1).$$

2. Kationenaustauschermembran gemäß Anspruch 1, wobei die Perfluorethylen-Einheit mit einer Ionenaustauschergruppe des Carbonsäuretyps eine Einheit ist, die durch die folgende Formel (A) dargestellt wird:

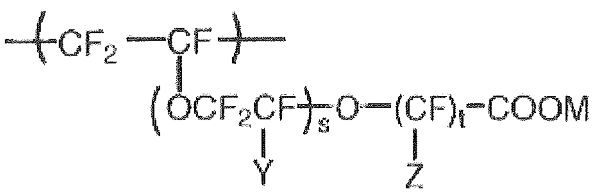 (A)

wobei s für eine ganze Zahl von 0 bis 2 steht, t für eine ganze Zahl von 1 bis 12 steht, Y und Z jeweils unabhängig für F oder $CF_3$ stehen und M für ein Alkalimetall steht.

3. Kationenaustauschermembran gemäß Anspruch 1 oder 2, wobei der Schmelzindex a und der Schmelzindex b der Beziehung genügen, die durch den folgenden Ausdruck (2) dargestellt wird:

$$(a - b)/(270 - 260) \leq 0{,}027 \times a + 0{,}14 \qquad (2).$$

4. Kationenaustauschermembran gemäß Anspruch 1 oder 2, wobei der Schmelzindex a und der Schmelzindex b der Beziehung genügen, die durch den folgenden Ausdruck (3) dargestellt wird:

$$(a - b)/(270 - 260) \leq 0{,}027 \times a + 0{,}09 \qquad (3).$$

5. Kationenaustauschermembran gemäß einem der Ansprüche 1 bis 4, wobei der Schmelzindex a = 4 bis 30 g/10 min beträgt, wobei der Schmelzindex a vorzugsweise 5 bis 20 g/10 min beträgt.

6. Kationenaustauschermembran gemäß einem der Ansprüche 1 bis 5, wobei das Äquivalentgewicht des fluorhaltigen Polymers, das durch Verestern der Ionenaustauschergruppe des Carbonsäuretyps mit Methanol erhalten wird, 900 bis 1400 g/Äq. beträgt, wobei vorzugsweise das Äquivalentgewicht des fluorhaltigen Polymers, das durch Verestern der Ionenaustauschergruppe des Carbonsäuretyps mit Methanol erhalten wird, 1100 bis 1300 g/Äq. beträgt, wobei das Äquivalentgewicht als [g Copolymerzusammensetzung/Äq. funktionelle Gruppe] definiert ist.

7. Fluorhaltiges Polymer, das eine Tetrafluorethylen-Einheit und eine Perfluorethylen-Einheit mit einer Methoxycarbonylgruppe umfasst, wobei der Schmelzindex a, der unter den Bedingungen 270 °C bei einer Last von 2,16 kg und einem Innendurchmesser der Öffnung von 2,09 mm gemessen wird, 3 bis 50 g/10 min beträgt und der Schmelzindex a und der Schmelzindex b, der unter den Bedingungen 260 °C bei einer Last von 2,16 kg und einem Innendurchmesser der Öffnung von 2,09 mm gemessen wird, der Beziehung genügen, die durch den folgenden Ausdruck (1) dargestellt wird (continued as Innendurch-

messer der Öffnung von 2,09 mm gemessen wird, der Beziehung genügen, die durch den folgenden Ausdruck (1) dargestellt wird:

$$(a - b)/(270 - 260) \leq 0{,}027 \times a + 0{,}19 \qquad (1).$$

8. Fluorhaltiges Polymer gemäß Anspruch 7, wobei die Perfluorethylen-Einheit mit einer Methoxycarbonylgruppe eine Einheit ist, die durch die folgende Formel (B) dargestellt wird:

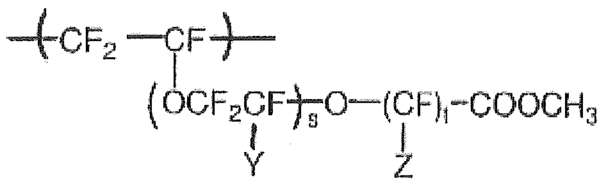

(B)

wobei s für eine ganze Zahl von 0 bis 2 steht, t für eine ganze Zahl von 1 bis 12 steht und Y und Z jeweils unabhängig für F oder $CF_3$ stehen.

9. Fluorhaltiges Polymer gemäß Anspruch 7 oder 8, wobei der Schmelzindex a und der Schmelzindex b der Beziehung genügen, die durch den folgenden Ausdruck (2) dargestellt wird:

$$(a - b)/(270 - 260) \leq 0{,}027 \times a + 0{,}14 \qquad (2).$$

10. Fluorhaltiges Polymer gemäß Anspruch 7 oder 8, wobei der Schmelzindex a und der Schmelzindex b der Beziehung genügen, die durch den folgenden Ausdruck (3) dargestellt wird:

$$(a - b)/(270 - 260) \leq 0{,}027 \times a + 0{,}09 \qquad (3).$$

11. Fluorhaltiges Polymer gemäß einem der Ansprüche 7 bis 10, wobei der Schmelzindex a = 4 bis 30 g/10 min beträgt, wobei der Schmelzindex a vorzugsweise 5 bis 20 g/10 min beträgt.

12. Fluorhaltiges Polymer gemäß einem der Ansprüche 7 bis 11, wobei sein Äquivalentgewicht 900 bis 1400 g/Äq. beträgt, wobei vorzugsweise sein Äquivalentgewicht 1100 bis 1300 g/Äq. beträgt, wobei das Äquivalentgewicht als [g Copolymerzusammensetzung/Äq. funktionelle Gruppe] definiert ist.

13. Elektrolysegefäß, umfassend:

wenigstens eine Anode, eine Kathode und die Kationenaustauschermembran gemäß einem der Ansprüche 1 bis 6, die sich zwischen der Anode und der Kathode befindet.

## Revendications

1. Membrane d'échange de cations comprenant un polymère contenant du fluor contenant une unité de tétrafluoroéthylène et une unité de perfluoroéthylène ayant un groupe d'échange d'ions de type acide carboxylique, où l'indice de fluidité a d'un polymère contenant du fluor obtenu par estérification du groupe d'échange d'ions de type acide carboxylique avec le méthanol est 3 à 50 g/10 min, l'indice de fluidité a étant mesuré selon JIS K-7210 dans des conditions à 270°C, une charge de 2,16 kg et un diamètre interne d'orifice de 2,09 mm, et l'indice de fluidité a et l'indice de fluidité b du polymère contenant du fluor obtenu par estérification du groupe d'échange d'ions de type acide carboxylique avec le méthanol satisfont la relation représentée par l'expression (1) suivante, l'indice de fluidité b étant mesuré dans des conditions à 260°C, une charge de 2,16 kg et un diamètre interne d'orifice de 2,09 mm:

$$(a - b)/(270 - 260) \leq 0{,}027 \times a + 0{,}19 \ (1).$$

**2.** Membrane d'échange de cations selon la revendication 1, où l'unité de perfluoroéthylène ayant un groupe d'échange d'ions de type acide carboxylique est une unité représentée par la formule (A) suivante:

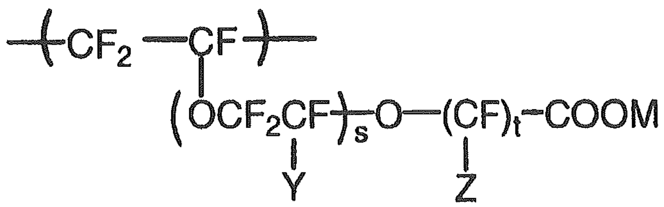

(A)

où s représente un entier de 0 à 2, t représente un entier de 1 à 12, Y et Z représentent chacun indépendamment F ou $CF_3$, et M représente un métal alcalin.

**3.** Membrane d'échange de cations selon la revendication 1 ou 2, où l'indice de fluidité a et l'indice de fluidité b satisfont la relation représentée par l'expression (2) suivante:

$$(a - b)/(270 - 260) \leq 0{,}027 \text{ x } a + 0{,}14 \text{ (2).}$$

**4.** Membrane d'échange de cations selon la revendication 1 ou 2, où l'indice de fluidité a et l'indice de fluidité b satisfont la relation représentée par l'expression (3) suivante:

$$(a - b)/(270 - 260) \leq 0{,}027 \text{ x } a + 0{,}09 \text{ (3).}$$

**5.** Membrane d'échange de cations selon l'une quelconque des revendications 1 à 4, où l'indice de fluidité a est 4 à 30 g/10 min, de préférence où l'indice de fluidité a est 5 à 20 g/10 min.

**6.** Membrane d'échange de cations selon l'une quelconque des revendications 1 à 5, où le poids par équivalent du polymère contenant du fluor obtenu par estérification du groupe d'échange d'ions de type acide carboxylique avec le méthanol est 900 à 1400 g/eq., de préférence où le poids par équivalent du polymère contenant du fluor obtenu par estérification du groupe d'échange d'ions de type acide carboxylique avec le méthanol est 1100 à 1300 g/eq., où le poids par équivalent est défini comme étant [g-composition de copolymère/eq.-groupe fonctionnel].

**7.** Polymère contenant du fluor comprenant une unité de tétrafluoroéthylène et une unité de perfluoroéthylène ayant un groupe méthoxycarbonyle, où l'indice de fluidité a mesuré dans des conditions à 270°C, une charge de 2,16 kg et un diamètre interne d'orifice de 2,09 mm est 3 à 50 g/10 min, et l'indice de fluidité a et l'indice de fluidité b mesuré dans des conditions à 260°C, une charge de 2,16 kg et un diamètre interne d'orifice de 2,09 mm satisfont la relation représentée par l'expression (1) suivante:

$$(a - b)/(270 - 260) \leq 0{,}027 \text{ x } a + 0{,}19 \text{ (1).}$$

**8.** Polymère contenant du fluor selon la revendication 7, où l'unité de perfluoroéthylène ayant un groupe méthoxycarbonyle est une unité représentée par la formule (B) suivante:

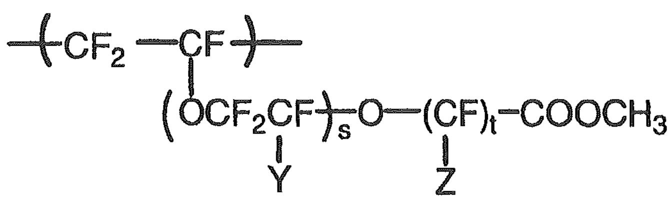

(B)

où s représente un entier de 0 à 2, t représente un entier de 1 à 12, Y et Z représentent chacun indépendamment F ou $CF_3$.

**9.** Polymère contenant du fluor selon la revendication 7 ou 8, où l'indice de fluidité a et l'indice de fluidité b satisfont la relation représentée par l'expression (2) suivante:

$$(a - b)/(270 - 260) \leq 0{,}027 \text{ x } a + 0{,}14 \ (2).$$

**10.** Polymère contenant du fluor selon la revendication 7 ou 8, où l'indice de fluidité a et l'indice de fluidité b satisfont la relation représentée par l'expression (3) suivante:

$$(a - b)/(270 - 260) \leq 0{,}027 \text{ x } a + 0{,}09 \ (3).$$

**11.** Polymère contenant du fluor selon l'une quelconque des revendications 7 à 10, où l'indice de fluidité a est 4 à 30 g/10 min, de préférence où l'indice de fluidité a est 5 à 20 g/10 min.

**12.** Polymère contenant du fluor selon l'une quelconque des revendications 7 à 11, où un poids par équivalent est 900 à 1400 g/eq., de préférence où un poids par équivalent est 1100 à 1300 g/eq., où le poids par équivalent est défini comme étant [g-composition de copolymère/eq.-groupe fonctionnel].

**13.** Récipient d'électrolyse comprenant:

au moins une anode, une cathode et la membrane d'échange de cations selon l'une quelconque des revendications 1 à 6 disposée entre l'anode et la cathode.

Fig.1

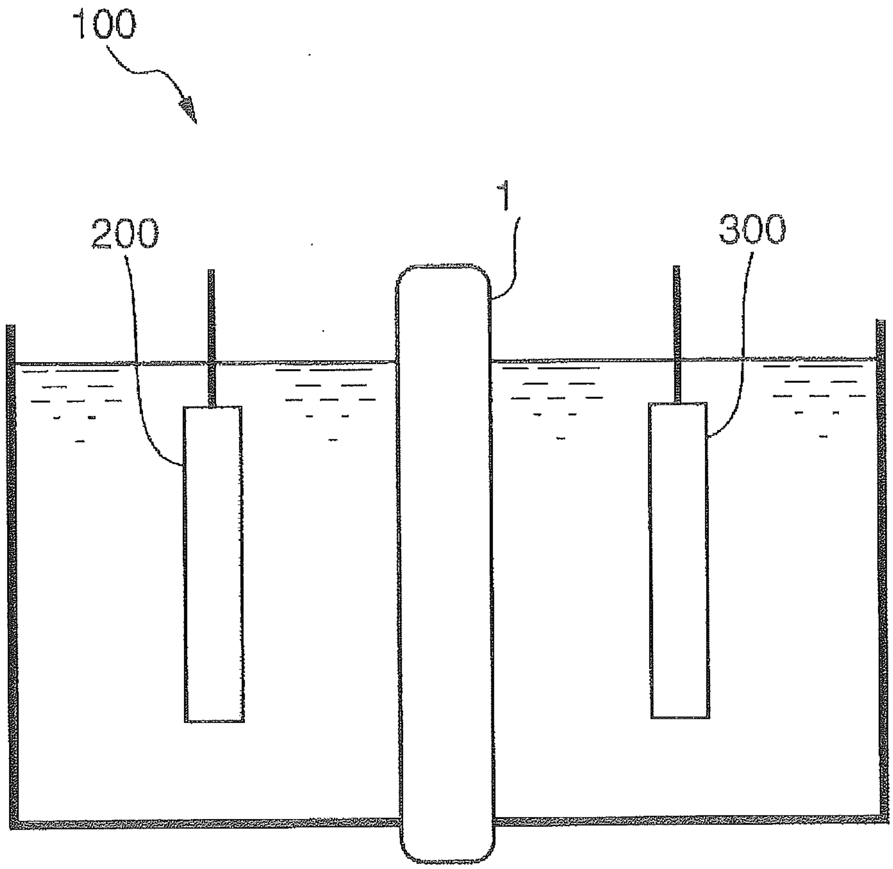

Fig.2

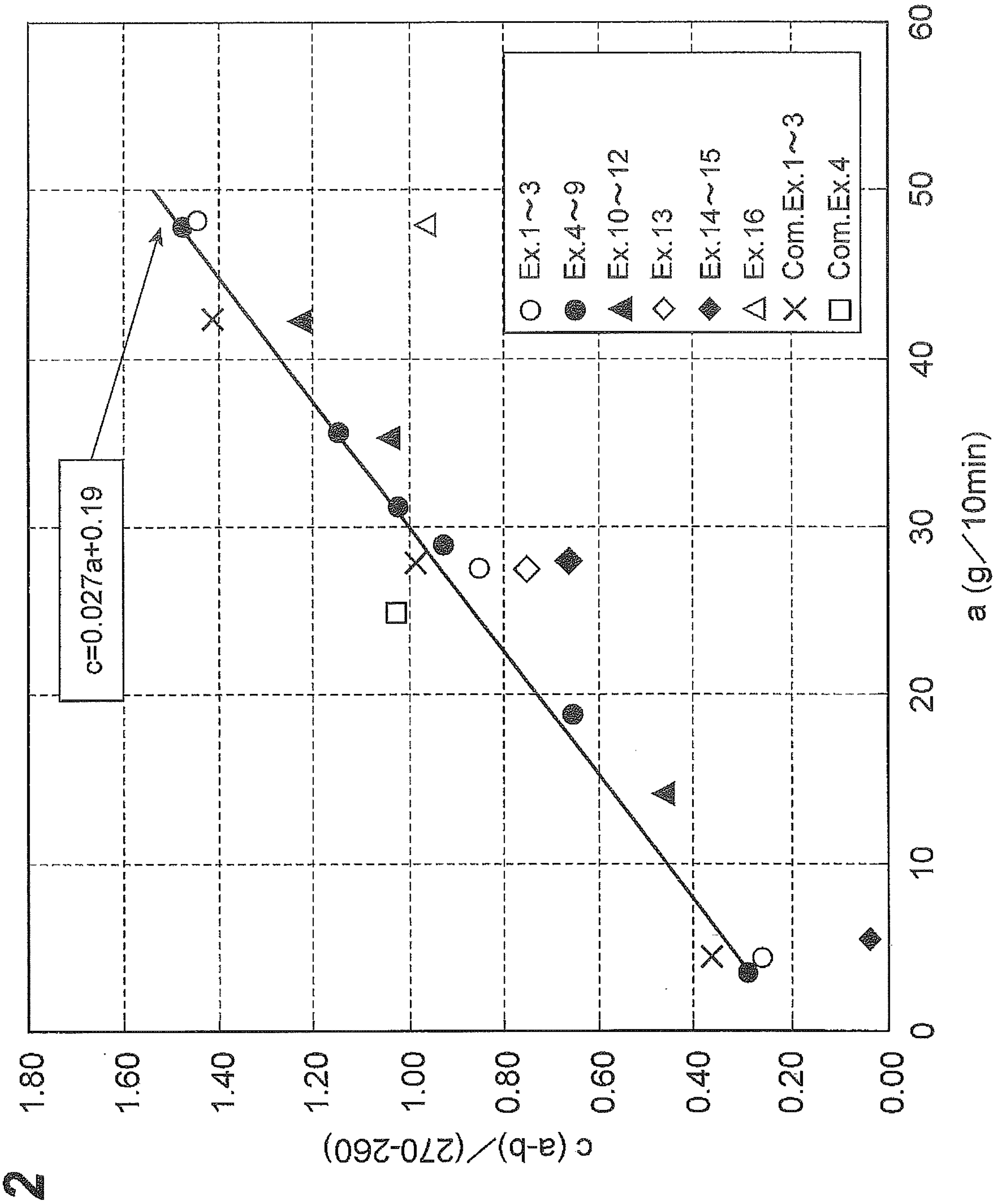
c (a-b)／(270-260)
1.80
1.60
1.40
1.20
1.00
0.80
0.60
0.40
0.20
0.00
0
10
20
30
40
50
60
a (g／10min)
c=0.027a+0.19
Ex.1～3
Ex.4～9
Ex.10～12
Ex.13
Ex.14～15
Ex.16
Com.Ex.1～3
Com.Ex.4

Fig.3

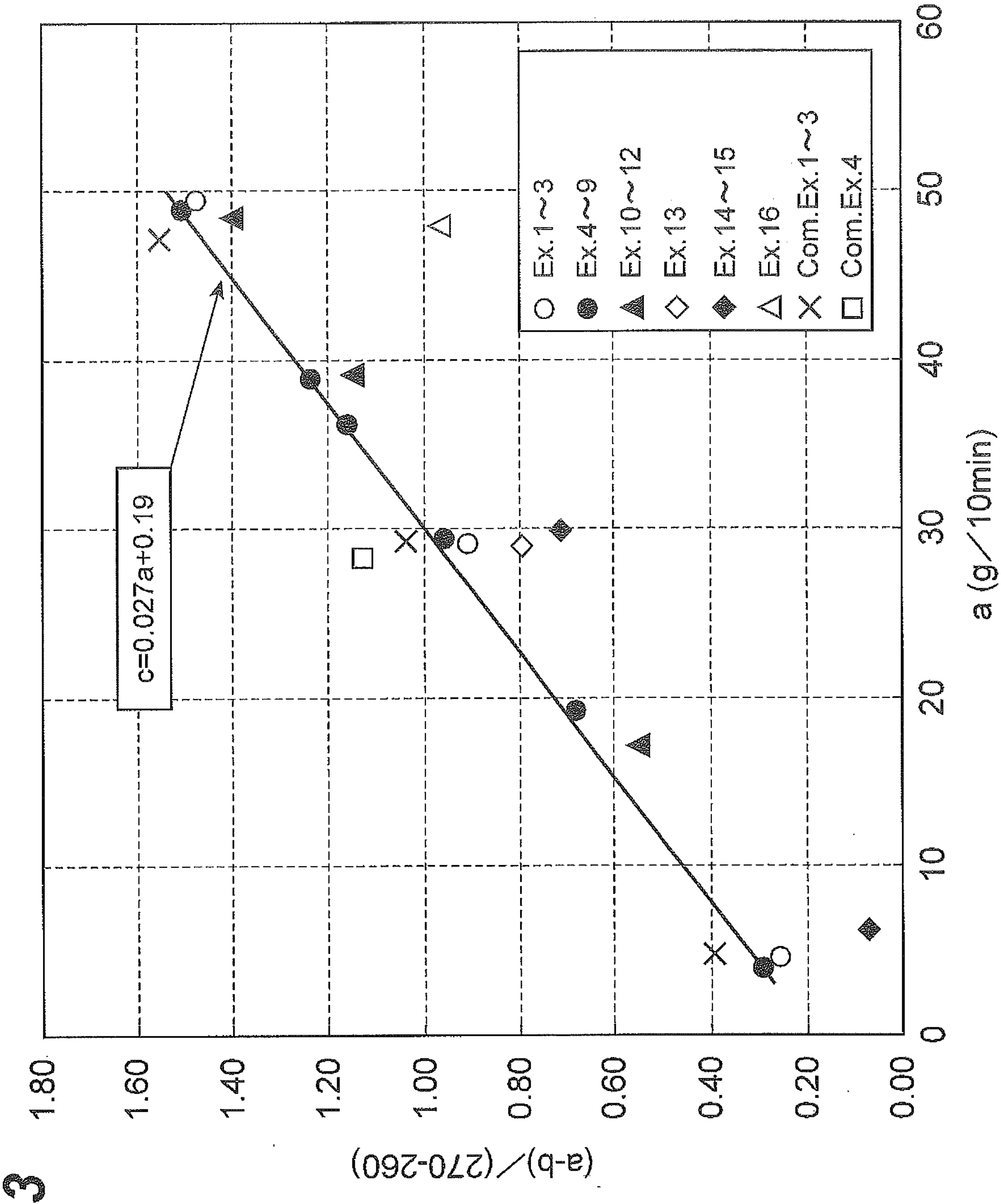
c=0.027a+0.19
Ex.1~3
Ex.4~9
Ex.10~12
Ex.13
Ex.14~15
Ex.16
Com.Ex.1~3
Com.Ex.4
(a-b)／(270-260)
1.80
1.60
1.40
1.20
1.00
0.80
0.60
0.40
0.20
0.00
0
10
20
30
40
50
60
a (g／10min)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2002275672 A